(19)

Europäisches
Patentamt
European
Patent Office
Office européen
des brevets

(11) **EP 2 830 312 A1**

(12) **EUROPEAN PATENT APPLICATION**
published in accordance with Art. 153(4) EPC

(43) Date of publication:
**28.01.2015 Bulletin 2015/05**

(51) Int Cl.:
***H04N 7/26*** *(0000.00)*

(21) Application number: **13764045.4**

(22) Date of filing: **20.03.2013**

(86) International application number:
**PCT/KR2013/002285**

(87) International publication number:
**WO 2013/141596 (26.09.2013 Gazette 2013/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.03.2012 US 201261613171 P**

(71) Applicant: **Samsung Electronics Co., Ltd.**
**Suwon-si, Gyeonggi-do, 443-742 (KR)**

(72) Inventors:
• **LEE, Tammy**
  **Seoul 137-070 (KR)**

• **CHOI, Byeong-doo**
  **Siheung-si**
  **Gyeonggi-do 429-717 (KR)**
• **MIN, Jung-hye**
  **Yongin-si**
  **Gyeonggi-do 446-959 (KR)**
• **PIAO, Yin-ji**
  **Suwon-si**
  **Gyeonggi-do 443-744 (KR)**

(74) Representative: **Jones, Ithel Rhys**
**Appleyard Lees**
**15 Clare Road**
**Halifax, Yorkshire HX1 2HY (GB)**

(54) **METHOD AND DEVICE FOR CODING SCALABLE VIDEO ON BASIS OF CODING UNIT OF TREE STRUCTURE, AND METHOD AND DEVICE FOR DECODING SCALABLE VIDEO ON BASIS OF CODING UNIT OF TREE STRUCTURE**

(57)      Provided are scalable video encoding and decoding based on coding units having a tree structure. A scalable video encoding method includes: encoding a lower layer image based on coding units having a tree structure including completely split coding units among hierarchically split coding units of maximum coding units of an image; determining scalable coding modes for performing scalable encoding on a higher layer image based on the coding units having the tree structure by referring to the lower layer image; predicting and encoding the higher layer image by referring to encoding information of the lower layer image based on the determined scalable coding modes; and outputting coding modes and predicted values of the lower layer image and the determined scalable coding modes of the higher layer image based on the determined scalable coding modes, wherein, among spatially split maximum coding units of the image of a video, each maximum coding unit is split into a plurality of coding units, and each coding unit is determined, individually from adjacent coding units, to split into smaller coding units.

FIG. 14

**Description**

TECHNICAL FIELD

The present invention relates to video encoding and decoding.

BACKGROUND ART

As hardware for reproducing and storing high resolution or high quality video content is being developed and supplied, a need for a video codec for effectively encoding or decoding the high resolution or high quality video content is increasing. In a conventional video codec, a video is encoded according to a limited encoding method based on a macroblock having a predetermined size.

Image data in a spatial domain is transformed into coefficients of a frequency domain by using frequency transformation. Video codec splits an image into blocks of predetermined sizes, performs discrete cosine transformation (DCT) on each of the blocks, and encodes frequency coefficients of block units to facilitate quick arithmetic operation of the frequency transformation. The coefficients of the frequency domain have easily compressible forms compared to those of the image data in the spatial domain. In particular, an image pixel value of the spatial domain is expressed as a prediction error through an inter prediction or an intra prediction of the video codec, and thus a large amount of data may be transformed to 0 if the frequency transformation is performed on the prediction error. The video codec replaces continuously and repeatedly generated data into data of a small size, thereby reducing an overall amount of data.

DETAILED DESCRIPTION OF THE INVENTION

TECHNICAL PROBLEM

The present invention provides a scalable video encoding method and a scalable video decoding method, and, in particular, a scalable video encoding method and a scalable video decoding method that use encoding units having a tree structure.

TECHNICAL SOLUTION

According to an aspect of the present invention, there is provided a scalable video encoding method including: encoding a lower layer image based on coding units having a tree structure including completely split coding units among hierarchically split coding units of maximum coding units of an image; determining scalable coding modes for performing scalable encoding on a higher layer image based on the coding units having the tree structure by referring to the lower layer image; predicting and encoding the higher layer image by referring to encoding information of the lower layer image based on the determined scalable coding modes; and outputting coding modes and predicted values of the lower layer image and the determined scalable coding modes of the higher layer image based on the determined scalable coding modes. Among spatially split maximum coding units of the image of a video, each maximum coding unit is split into a plurality of coding units, and each coding unit is determined, individually from adjacent coding units, to split into smaller coding units.

ADVANTAGEOUS EFFECTS

Between a lower layer image and a higher layer image that are encoded using encoding units having a tree structure, prediction units and transformation units in the encoding units, a lower layer data unit and a higher layer data unit that correspond to each other are accurately detected, and the higher layer data unit is determined using the lower layer data unit and diverse encoding information, thereby reducing a transmission bit rate of encoding information for the higher layer image, and effectively implementing scalable video encoding and decoding methods.

DESCRIPTION OF THE DRAWINGS

FIG. 1 is a block diagram of an apparatus for encoding a video based on a coding unit having a tree structure, according to an embodiment of the present invention;
FIG. 2 is a block diagram of an apparatus for decoding a video based on a coding unit having a tree structure, according to an embodiment of the present invention;

FIG. 3 is a diagram for describing a concept of coding units according to an embodiment of the present invention;

FIG. 4 is a block diagram of an image encoder based on coding units according to an embodiment of the present invention;

FIG. 5 is a block diagram of an image decoder based on coding units according to an embodiment of the present invention;

FIG. 6 is a diagram illustrating deeper coding units according to depths, and partitions according to an embodiment of the present invention;

FIG. 7 is a diagram for describing a relationship between a coding unit and transformation units, according to an embodiment of the present invention;

FIG. 8 is a diagram for describing encoding information of coding units corresponding to a coded depth, according to an embodiment of the present invention;

FIG. 9 is a diagram of deeper coding units according to depths, according to an embodiment of the present invention;

FIGS. 10 through 12 are diagrams for describing a relationship between coding units, prediction units, and transformation units, according to an embodiment of the present invention;

FIG. 13 is a diagram for describing a relationship between a coding unit, a prediction unit or a partition, and a transformation unit, according to encoding mode information of Table 0;

FIG. 14 is a block diagram of a scalable video encoding apparatus, according to an embodiment of the present invention;

FIG. 15 is a block diagram of a scalable video decoding apparatus, according to an embodiment of the present invention;

FIG. 16 is a block diagram of a scalable video encoding system, according to an embodiment of the present invention;

FIG. 17 is a diagram for explaining an inter-layer prediction method, according to an embodiment of the present invention;

FIG. 18 is a diagram for explaining a mapping relationship between a lower layer and a higher layer, according to an embodiment of the present invention;

FIG. 19 is a flowchart of a scalable video encoding method, according to an embodiment of the present invention;

FIG. 20 is a flowchart of a scalable video decoding method, according to an embodiment of the present invention;

FIG. 21 is a flowchart of a scalable video encoding method, according to another embodiment of the present invention; and

FIG. 22 is a flowchart of a scalable video decoding method, according to another embodiment of the present invention.

## BEST MODE

According to an aspect of the present invention, there is provided a scalable video encoding method including: encoding a lower layer image based on coding units having a tree structure including completely split coding units among hierarchically split coding units of maximum coding units of an image; determining scalable coding modes for performing scalable encoding on a higher layer image based on the coding units having the tree structure by referring to the lower layer image; predicting and encoding the higher layer image by referring to encoding information of the lower layer image based on the determined scalable coding modes; and outputting coding modes and predicted values of the lower layer image and the determined scalable coding modes of the higher layer image based on the determined scalable coding modes. Among spatially split maximum coding units of the image of a video, each maximum coding unit is split into a plurality of coding units, and each coding unit is determined, individually from adjacent coding units, to split into smaller coding units.

According to another aspect of the present invention, there is provided a scalable video encoding method including: encoding a lower layer image based on coding units having a tree structure including completely split coding units among hierarchically split coding units of maximum coding units of an image; determining scalable coding modes for performing scalable encoding on a higher layer image based on the coding units having the tree structure by referring to the lower layer image; determining data units of the lower layer image that are to be referred to by data units of the higher layer image based on the determined scalable coding modes; and predicting and encoding the higher layer image by referring to encoding information of the determined data units of the lower layer image.

According to another aspect of the present invention, there is provided a scalable video decoding method including: parsing encoding information of a lower layer image and scalable coding modes of a higher layer image from a received bitstream; decoding the lower layer image by using the parsed encoding information of the lower layer image based on coding units having a tree structure including completely split coding units among hierarchically split coding units of maximum coding units; and predicting and decoding the higher layer image based on the coding units having the tree structure by referring to the encoding information of the lower layer image according to the determined scalable coding modes.

According to another aspect of the present invention, there is provided a scalable video decoding method including: decoding the lower layer image using encoding information of a lower layer image parsed from a received bitstream by using the parsed encoding information of the lower layer image based on coding units having a tree structure including completely split coding units among hierarchically split coding units of maximum coding units; determining data units of the lower layer image that are to be referred to by data units of the higher layer image according to the determined scalable coding modes of the higher layer image parsed from the bitstream, and predicting and decoding the higher layer image based on the coding units having the tree structure by referring to encoding information of the determined data units of the lower layer image.

According to another aspect of the present invention, there is provided a scalable video encoding apparatus including: a lower layer encoder which encodes a lower layer image based on coding units having a tree structure including completely split coding units among hierarchically split coding units of maximum coding units of an image; a higher layer encoder which determines scalable coding modes for performing scalable encoding on a higher layer image based on the coding units having the tree structure by referring to the lower layer image, and predicts and encodes the higher layer image by referring to encoding information of the lower layer image based on the determined scalable coding modes; and an output unit which outputs coding modes and predicted values of the lower layer image and the determined scalable coding modes of the higher layer image based on the determined scalable coding modes.

According to another aspect of the present invention, there is provided a scalable video encoding apparatus including: a parsing unit which parses encoding information of a lower layer image and scalable coding modes of a higher layer image from a received bitstream; a lower layer decoder which decodes the lower layer image by using the parsed encoding information of the lower layer image based on coding units having a tree structure including completely split coding units among hierarchically split coding units of maximum coding units; and a high layer decoder which predicts and decodes the higher layer image based on the coding units having the tree structure by referring to the encoding information of the lower layer image according to the determined scalable coding modes.

According to another aspect of the present invention, there is provided a scalable video decoding apparatus including: a parsing unit which parses encoding information of a lower layer image and scalable coding modes of a higher layer image from a received bitstream; a lower layer decoder which decodes the lower layer image by using the parsed encoding information of the lower layer image based on coding units having a tree structure including completely split coding units among hierarchically split coding units of maximum coding units; and a higher layer decoder which predicts and decodes the higher layer image based on the coding units having the tree structure by referring to the encoding information of the lower layer image according to the determined scalable coding modes.

According to another aspect of the present invention, there is provided a scalable video decoding apparatus including: a lower layer decoder which decodes the lower layer image using encoding information of a lower layer image parsed from a received bitstream by using the parsed encoding information of the lower layer image based on coding units having a tree structure including completely split coding units among hierarchically split coding units of maximum coding units; a higher layer decoder which determines data units of the lower layer image that are to be referred to by data units of the higher layer image according to the determined scalable coding modes of the higher layer image parsed from the bitstream, and predicts and decodes the higher layer image based on the coding units having the tree structure by referring to encoding information of the determined data units of the lower layer image.

According to another aspect of the present invention, there is provided a computer-readable recording medium having recorded thereon a program for executing the scalable video encoding method. According to another aspect of the present invention, there is provided a computer-readable recording medium having recorded thereon a program for executing the scalable video decoding method.

MODE OF THE INVENTION

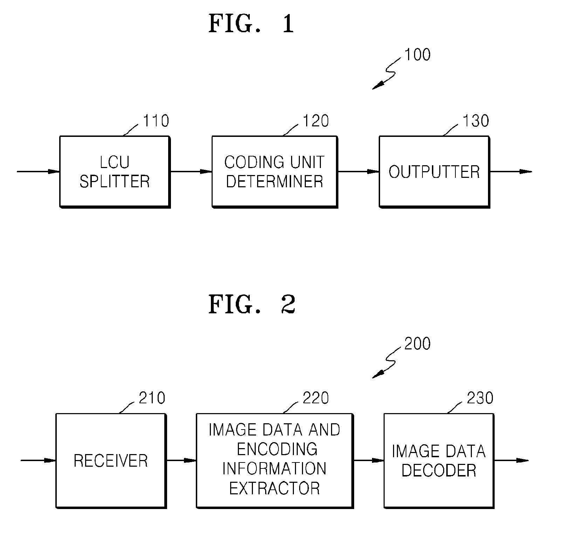

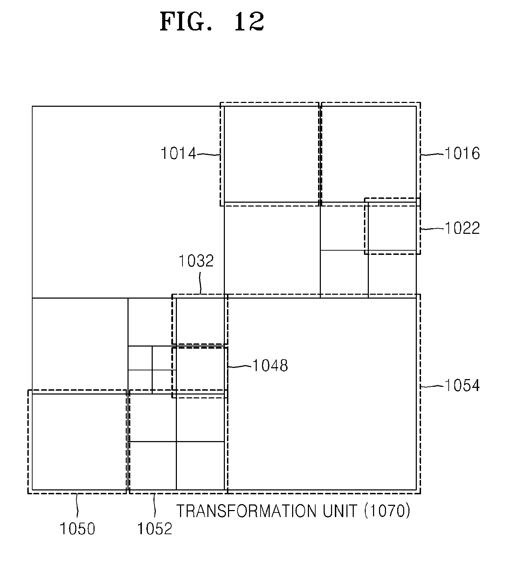

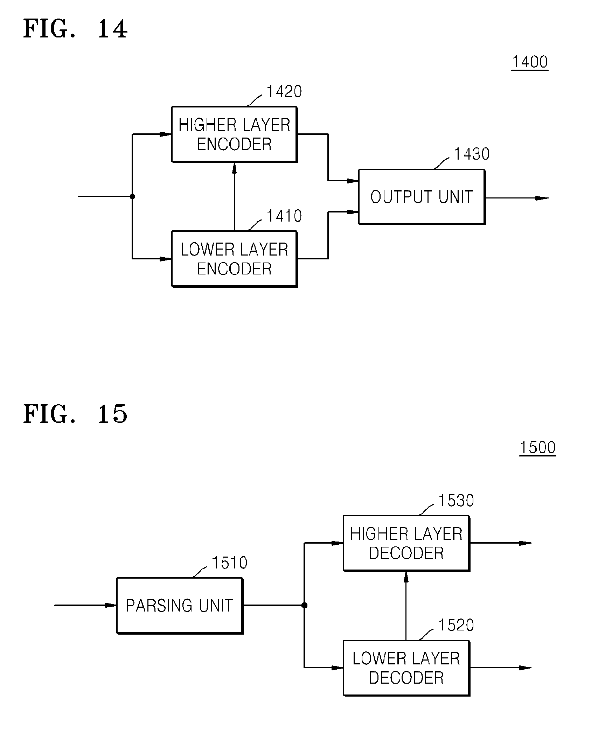

Hereinafter, methods of encoding and decoding a video based on a coding unit having a tree structure, according to embodiments of the present invention, will be described with reference to FIGS. 1 through 13. Then, methods of encoding and decoding a scalable video based on a coding unit having a tree structure, according to embodiments of the present invention, will be described with reference to FIGS. 14 through 22.

The methods of encoding and decoding a video based on a coding unit having a tree structure, according to embodiments of the present invention, will now be described with reference to FIGS. 1 through 13.

FIG. 1 is a block diagram of a video encoding apparatus 100 based on a coding unit having a tree structure, according to an embodiment of the present invention.

The video encoding apparatus 100 includes a maximum coding unit splitter 110, a coding unit determiner 120, and an output unit 130.

The maximum coding unit splitter 110 may split a current picture based on a maximum coding unit for the current picture of an image. If the current picture is larger than the maximum coding unit, image data of the current picture may be split into the at least one maximum coding unit. The maximum coding unit according to an embodiment of the present invention may be a data unit having a size of 32x32, 64x64, 128x128, 256x256, etc., wherein a shape of the data unit is a square having a width and length in squares of 2. The image data may be output to the coding unit determiner 120 according to the at least one maximum coding unit.

A coding unit according to an embodiment of the present invention may be characterized by a maximum size and a depth. The depth denotes a amount of times the coding unit is spatially split from the maximum coding unit, and as the depth deepens, deeper encoding units according to depths may be split from the maximum coding unit to a minimum coding unit. A depth of the maximum coding unit is an uppermost depth and a depth of the minimum coding unit is a lowermost depth. Since a size of a coding unit corresponding to each depth decreases as the depth of the maximum coding unit deepens, a coding unit corresponding to an upper depth may include a plurality of coding units corresponding to lower depths.

As described above, the image data of the current picture is split into the maximum coding units according to a maximum size of the coding unit, and each of the maximum coding units may include deeper coding units that are split according to depths. Since the maximum coding unit according to an embodiment of the present invention is split according to depths, the image data of a spatial domain included in the maximum coding unit may be hierarchically classified according to depths.

A maximum depth and a maximum size of a coding unit, which limit the total amount of times a height and a width of the maximum coding unit are hierarchically split, may be predetermined.

The coding unit determiner 120 encodes at least one split region obtained by splitting a region of the maximum coding unit according to depths, and determines a depth to output a finally encoded image data according to the at least one split region. In other words, the coding unit determiner 120 determines a coded depth by encoding the image data in the deeper coding units according to depths, according to the maximum coding unit of the current picture, and selecting a depth having the least encoding error. Thus, the encoded image data of the coding unit corresponding to the determined coded depth is finally output. Also, the coding units corresponding to the coded depth may be regarded as encoded coding units.

The determined coded depth and the encoded image data according to the determined coded depth are output to the output unit 130.

The image data in the maximum coding unit is encoded based on the deeper coding units corresponding to at least one depth equal to or below the maximum depth, and results of encoding the image data are compared based on each of the deeper coding units. A depth having the least encoding error may be selected after comparing encoding errors of the deeper coding units. At least one coded depth may be selected for each maximum coding unit.

The size of the maximum coding unit is split as a coding unit is hierarchically split according to depths, and as the amount of coding units increases. Also, even if coding units correspond to same depth in one maximum coding unit, it is determined whether to split each of the coding units corresponding to the same depth to a lower depth by measuring an encoding error of the image data of the each coding unit, separately. Accordingly, even when image data is included in one maximum coding unit, the image data is split to regions according to the depths and the encoding errors may differ according to regions in the one maximum coding unit, and thus the coded depths may differ according to regions in the image data. Thus, one or more coded depths may be determined in one maximum coding unit, and the image data of the maximum coding unit may be divided according to coding units of at least one coded depth.

Accordingly, the coding unit determiner 120 may determine coding units having a tree structure included in the maximum coding unit. The 'coding units having a tree structure' according to an embodiment of the present invention include coding units corresponding to a depth determined to be the coded depth, from among all deeper coding units included in the maximum coding unit. A coding unit of a coded depth may be hierarchically determined according to depths in the same region of the maximum coding unit, and may be independently determined in different regions. Similarly, a coded depth in a current region may be independently determined from a coded depth in another region.

A maximum depth according to an embodiment of the present invention is an index related to the amount of splitting times from a maximum coding unit to a minimum coding unit. A first maximum depth according to an embodiment of the present invention may denote the total amount of splitting times from the maximum coding unit to the minimum coding unit. A second maximum depth according to an embodiment of the present invention may denote the total number of depth levels from the maximum coding unit to the minimum coding unit. For example, when a depth of the maximum coding unit is 0, a depth of a coding unit, in which the maximum coding unit is split once, may be set to 1, and a depth of a coding unit, in which the maximum coding unit is split twice, may be set to 2. Here, if the minimum coding unit is a coding unit in which the maximum coding unit is split four times, 5 depth levels of depths 0, 1, 2, 3 and 4 exist, and thus the first and second maximum depths may be set to 4 and 5, respectively.

Prediction encoding and transformation may be performed according to the maximum coding unit. The prediction encoding and the transformation are also performed based on the deeper coding units according to a depth equal to or depths less than the maximum depth, according to the maximum coding unit.

Since the amount of deeper coding units increases whenever the maximum coding unit is split according to depths, encoding including the prediction encoding and the transformation is performed on all of the deeper coding units generated as the depth deepens. For convenience of description, the prediction encoding and the transformation will now be described based on a coding unit of a current depth, in a maximum coding unit.

The video encoding apparatus 100 may variously select a size or shape of a data unit for encoding the image data. In order to encode the image data, operations, such as prediction encoding, transformation, and entropy encoding, are performed, and at this time, the same data unit may be used for all operations or different data units may be used for each operation.

For example, the video encoding apparatus 100 may select not only a coding unit for encoding the image data, but also a data unit different from the coding unit so as to perform the prediction encoding on the image data in the coding unit.

In order to perform prediction encoding in the maximum coding unit, the prediction encoding may be performed based on a coding unit corresponding to a coded depth, i.e., based on a coding unit that is no longer split to coding units corresponding to a lower depth. Hereinafter, the coding unit that is no longer split and becomes a basis unit for prediction encoding will now be referred to as a 'prediction unit'. A partition obtained by splitting the prediction unit may include a prediction unit or a data unit obtained by splitting at least one of a height and a width of the prediction unit. The partition may be a data unit obtained by splitting the prediction unit of the coding unit. The prediction unit may be a partition having the same size as that of the coding unit.

For example, when a coding unit of 2Nx2N (where N is a positive integer) is no longer split and becomes a prediction unit of 2Nx2N, and a size of a partition may be 2Nx2N, 2NxN, Nx2N, or NxN. Examples of a partition type include symmetrical partitions that are obtained by symmetrically splitting a height or width of the prediction unit, partitions obtained by asymmetrically splitting the height or width of the prediction unit, such as 1:n or n:1, partitions that are obtained by geometrically splitting the prediction unit, and partitions having arbitrary shapes.

A prediction mode of the prediction unit may be at least one of an intra mode, a inter mode, and a skip mode. For example, the intra mode or the inter mode may be performed on the partition of 2Nx2N, 2NxN, Nx2N, or NxN. Also, the skip mode may be performed only on the partition of 2Nx2N. The encoding is independently performed on one prediction unit in a coding unit, thereby selecting a prediction mode having a least encoding error.

The video encoding apparatus 100 may also perform the transformation on the image data in a coding unit based not only on the coding unit for encoding the image data, but also based on a data unit that is different from the coding unit. In order to perform the transformation in the coding unit, the transformation may be performed based on a data unit having a size smaller than or equal to the coding unit. For example, the data unit for the transformation may include a data unit for an intra mode and a data unit for an inter mode.

A data unit used as a base of the transformation will now be referred to as a 'transformation unit'. A transformation depth indicating the amount of splitting times to reach the transformation unit by splitting the height and width of the coding unit may also be set in the transformation unit. For example, in a current coding unit of 2Nx2N, a transformation depth may be 0 when the size of a transformation unit is also 2Nx2N, may be 1 when each of the height and width of the current coding unit is split into two equal parts, totally split into $4^1$ transformation units, and the size of the transformation unit is thus NxN, and may be 2 when each of the height and width of the current coding unit is split into four equal parts, totally split into $4^2$ transformation units and the size of the transformation unit is thus N/2xN/2. For example, the transformation unit may be set according to a hierarchical tree structure, in which a transformation unit of an upper transformation depth is split into four transformation units of a lower transformation depth according to the hierarchical characteristics of a transformation depth.

Similarly to the coding unit, the transformation unit in the coding unit may be recursively split into smaller sized regions, so that the transformation unit may be determined independently in units of regions. Thus, residual data in the coding unit may be divided according to the transformation having the tree structure according to transformation depths.

A transformation depth indicating the number of splitting times to reach the transformation unit by splitting the height and width of the coding unit may also be set in the transformation unit. For example, in a current coding unit of 2Nx2N, a transformation depth may be 0 when the size of a transformation unit is 2Nx2N, may be 1 when the size of the transformation unit is thus NxN, and may be 2 when the size of the transformation unit is thus N/2xN/2. In other words, the transformation unit having the tree structure may be set according to the transformation depths.

Encoding information according to coding units corresponding to a coded depth requires not only information about the coded depth, but also about information related to prediction encoding and transformation. Accordingly, the coding unit determiner 120 not only determines a coded depth having a least encoding error, but also determines a partition type in a prediction unit, a prediction mode according to prediction units, and a size of a transformation unit for transformation.

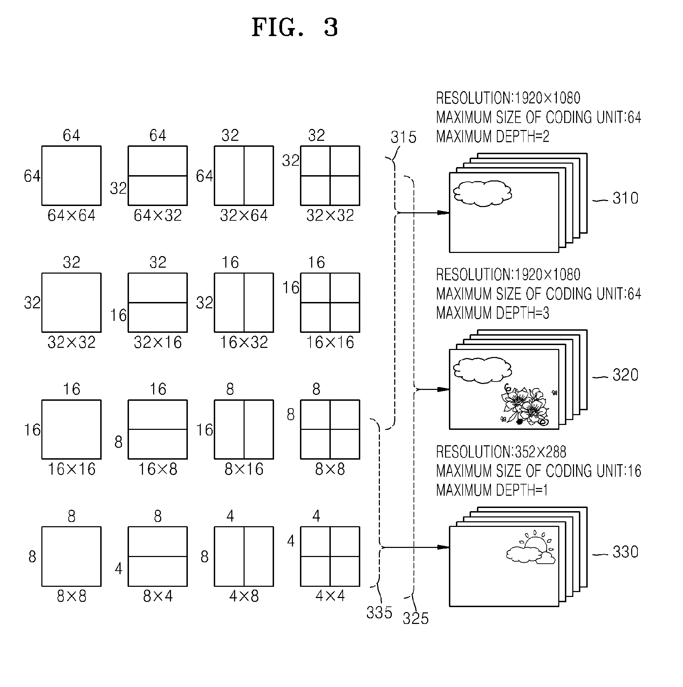

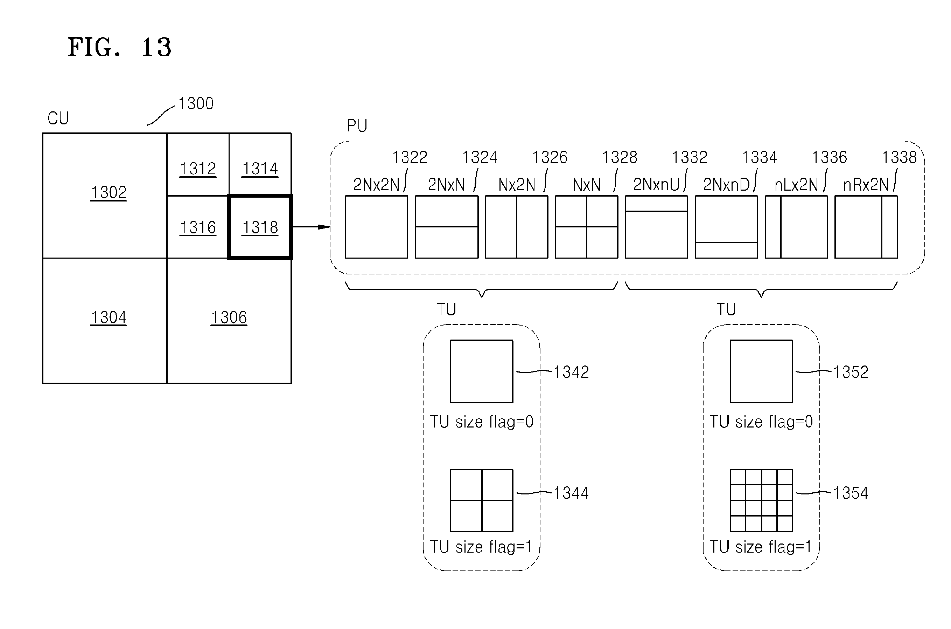

Coding units according to a tree structure in a maximum coding unit and a method of determining a prediction unit/partition and transformation unit, according to embodiments of the present invention, will be described in detail later with reference to FIGS. 3 and 13.

The coding unit determiner 120 may measure an encoding error of deeper coding units according to depths by using Rate-Distortion Optimization based on Lagrangian multipliers.

The output unit 130 outputs the image data of the maximum coding unit, which is encoded based on the at least one coded depth determined by the coding unit determiner 120, and information about the encoding mode according to the coded depth, in bitstreams.

The encoded image data may be obtained by encoding residual data of an image.

The information about the encoding mode according to coded depth may include information about the coded depth, about the partition type in the prediction unit, the prediction mode, and the size of the transformation unit.

The information about the coded depth may be defined by using split information according to depths, which indicates whether encoding is performed on coding units of a lower depth instead of a current depth. If the current depth of the current coding unit is the coded depth, image data in the current coding unit is encoded and output, and thus the split information may be defined not to split the current coding unit to a lower depth. Alternatively, if the current depth of the current coding unit is not the coded depth, the encoding is performed on the coding unit of the lower depth, and thus the split information may be defined to split the current coding unit to obtain the coding units of the lower depth.

If the current depth is not the coded depth, encoding is performed on the coding unit that is split into the coding unit of the lower depth. Since at least one coding unit of the lower depth exists in one coding unit of the current depth, the encoding is repeatedly performed on each coding unit of the lower depth, and thus the encoding may be recursively performed for the coding units having the same depth.

Since the coding units having a tree structure are determined for one maximum coding unit, and information about at least one encoding mode is determined for a coding unit of a coded depth, information about at least one encoding mode may be determined for one maximum coding unit. Also, a coded depth of the image data of the maximum coding unit may be different according to locations since the image data is hierarchically split according to depths, and thus information about the coded depth and the encoding mode may be set for the image data.

Accordingly, the output unit 130 may assign encoding information about a corresponding coded depth and an encoding mode to at least one of the coding unit, the prediction unit, and a minimum unit included in the maximum coding unit.

The minimum unit according to an embodiment of the present invention is a rectangular data unit obtained by splitting the minimum coding unit constituting the lowermost depth by 4. Alternatively, the minimum unit may be a maximum rectangular data unit that may be included in all of the coding units, prediction units, partition units, and transformation units included in the maximum coding unit.

For example, the encoding information output through the output unit 130 may be classified into encoding information according to coding units, and encoding information according to prediction units. The encoding information according to the coding units may include the information about the prediction mode and about the size of the partitions. The encoding information according to the prediction units may include information about an estimated direction of an inter mode, about a reference image index of the inter mode, about a motion vector, about a chroma component of an intra mode, and about an interpolation method of the intra mode.

Also, information about a maximum size of the coding unit defined according to pictures, slices, or group of pictures (GOPs), and information about a maximum depth may be inserted into a header of a bitstream, a sequence parameter set (SPS) or a picture parameter set.

Information about a maximum size of the transformation unit allowed for a current video and information about a minimum size of the transformation unit may be output through the header of the bitstream, the SPS, or the picture parameter set.

In the video encoding apparatus 100, the deeper coding unit may be a coding unit obtained by dividing a height or width of a coding unit of an upper depth, which is one layer above, by two. In other words, when the size of the coding unit of the current depth is 2Nx2N, the size of the coding unit of the lower depth is NxN. Also, the coding unit of the current depth having the size of 2Nx2N may include maximum 4 of the coding unit of the lower depth.

Accordingly, the video encoding apparatus 100 may form the coding units having the tree structure by determining coding units having an optimum shape and an optimum size for each maximum coding unit, based on the size of the maximum coding unit and the maximum depth determined considering characteristics of the current picture. Also, since encoding may be performed on each maximum coding unit by using any one of various prediction modes and transformations, an optimum encoding mode may be determined considering characteristics of the coding unit of various image sizes.

In general, if an image having a high resolution or a large amount of data is encoded in a conventional macroblock, the amount of macroblocks per picture excessively increases. Accordingly, the amount of pieces of compressed information generated for each macroblock increases, and thus it is difficult to transmit the compressed information and data compression efficiency decreases. However, by using the video encoding apparatus 100, image compression efficiency may be increased since a coding unit and a coding method are adjusted while considering characteristics of an image while increasing a maximum size of a coding unit while considering the size of the image.

FIG. 2 is a block diagram of a video decoding apparatus 200 based on a coding unit having a tree structure, according to an embodiment of the present invention.

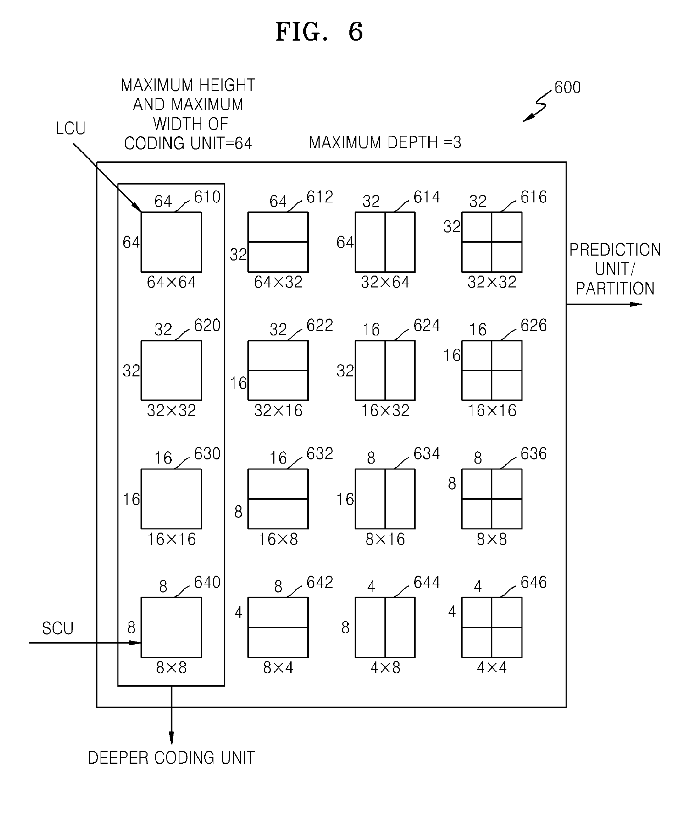

The video decoding apparatus 200 includes a receiver 210, an image data and encoding information extractor 220, and an image data decoder 230. Definitions of various terms, such as a coding unit, a depth, a prediction unit, a transformation unit, and information about various encoding modes, for various operations of the video decoding apparatus 200 are identical to those described with reference to FIG. 6 and the video encoding apparatus 100.

The receiver 210 receives and parses a bitstream of an encoded video. The image data and encoding information extractor 220 extracts encoded image data for each coding unit from the parsed bitstream, wherein the coding units have a tree structure according to each maximum coding unit, and outputs the extracted image data to the image data decoder 230. The image data and encoding information extractor 220 may extract information about a maximum size of a coding unit of a current picture, from a header about the current picture, a SPS, or a picture parameter set.

Also, the image data and encoding information extractor 220 extracts information about a coded depth and an encoding mode for the coding units having a tree structure according to each maximum coding unit, from the parsed bitstream. The extracted information about the coded depth and the encoding mode is output to the image data decoder 230. In other words, the image data in a bit stream is split into the maximum coding unit so that the image data decoder 230 decodes the image data for each maximum coding unit.

The information about the coded depth and the encoding mode according to the maximum coding unit may be set for information about at least one coding unit corresponding to the coded depth, and information about an encoding mode may include information about a partition type of a corresponding coding unit corresponding to the coded depth, about a prediction mode, and a size of a transformation unit. Splitting information according to depths may be extracted as the information about the coded depth.

The information about the coded depth and the encoding mode according to each maximum coding unit extracted by the image data and encoding information extractor 220 is information about a coded depth and an encoding mode determined to generate a minimum encoding error when an encoder, such as the video encoding apparatus 100, repeatedly performs encoding for each deeper coding unit according to depths according to each maximum coding unit. Accordingly, the video decoding apparatus 200 may restore an image by decoding the image data according to a coded depth and an encoding mode that generates the minimum encoding error.

Since encoding information about the coded depth and the encoding mode may be assigned to a predetermined data unit from among a corresponding coding unit, a prediction unit, and a minimum unit, the image data and encoding information extractor 220 may extract the information about the coded depth and the encoding mode according to the predetermined data units. The predetermined data units to which the same information about the coded depth and the encoding mode is assigned may be inferred to be the data units included in the same maximum coding unit.

The image data decoder 230 restores the current picture by decoding the image data in each maximum coding unit based on the information about the coded depth and the encoding mode according to the maximum coding units. In other words, the image data decoder 230 may decode the encoded image data based on the extracted information about the partition type, the prediction mode, and the transformation unit for each coding unit from among the coding units having the tree structure included in each maximum coding unit. A decoding process may include a prediction including intra prediction and motion compensation, and an inverse transformation. Inverse transformation may be performed according to method of inverse orthogonal transformation or inverse integer transformation.

The image data decoder 230 may perform intra prediction or motion compensation according to a partition and a prediction mode of each coding unit, based on the information about the partition type and the prediction mode of the prediction unit of the coding unit according to coded depths.

Also, the image data decoder 230 may perform inverse transformation according to each transformation unit in the coding unit, based on the information about the size of the transformation unit of the coding unit according to coded depths, so as to perform the inverse transformation according to maximum coding units. A pixel value of a spatial region of the coding unit may be reconstructed through the inverse transformation.

The image data decoder 230 may determine at least one coded depth of a current maximum coding unit by using split information according to depths. If the split information indicates that image data is no longer split in the current depth, the current depth is a coded depth. Accordingly, the image data decoder 230 may decode encoded data of at least one coding unit corresponding to the each coded depth in the current maximum coding unit by using the information about the partition type of the prediction unit, the prediction mode, and the size of the transformation unit for each coding unit corresponding to the coded depth, and output the image data of the current maximum coding unit.

In other words, data units containing the encoding information including the same split information may be gathered by observing the encoding information set assigned for the predetermined data unit from among the coding unit, the prediction unit, and the minimum unit, and the gathered data units may be considered to be one data unit to be decoded by the image data decoder 230 in the same encoding mode. In this way, decoding of a current encoding unit may be performed by obtaining information regarding an encoding mode according to each of the determined encoding units.

The video decoding apparatus 200 may obtain information about at least one coding unit that generates the minimum encoding error when encoding is recursively performed for each maximum coding unit, and may use the information to decode the current picture. In other words, the coding units having the tree structure determined to be the optimum coding units in each maximum coding unit may be decoded.

Accordingly, even if image data has a high resolution and a large amount of data, the image data may be efficiently decoded and reconstructed by using the size of a coding unit, an encoding mode, a prediction filter, and a prediction filtering method, which are adaptively determined according to characteristics of the image data, by using information about an optimum encoding mode received from an encoder.

FIG. 3 is a diagram for describing a concept of coding units according to an embodiment of the present invention.

A size of a coding unit may be expressed in width x height, and may be 64x64, 32x32, 16x16, and 8x8. A coding unit of 64x64 may be split into partitions of 64x64, 64x32, 32x64, or 32x32, and a coding unit of 32x32 may be split into partitions of 32x32, 32x16, 16x32, or 16x16, a coding unit of 16x16 may be split into partitions of 16x16, 16x8, 8x16, or 8x8, and a coding unit of 8x8 may be split into partitions of 8x8, 8x4, 4x8, or 4x4.

In video data 310, a resolution is 1920x1080, a maximum size of a coding unit is 64, and a maximum depth is 2. In video data 320, a resolution is 1920x1080, a maximum size of a coding unit is 64, and a maximum depth is 3. In video data 330, a resolution is 352x288, a maximum size of a coding unit is 16, and a maximum depth is 1. The maximum depth shown in FIG. 3 denotes a total number of splits from a maximum coding unit to a minimum decoding unit.

If a resolution is high or a data amount is large, a maximum size of a coding unit may be large so as to not only increase encoding efficiency but also to accurately reflect characteristics of an image. Accordingly, the maximum size of the coding unit of the video data 310 and 320 having the higher resolution than the video data 330 may be 64.

Since the maximum depth of the video data 310 is 2, coding units 315 of the vide data 310 may include a maximum coding unit having a long axis size of 64, and coding units having long axis sizes of 32 and 16 since depths are deepened to two layers by splitting the maximum coding unit twice. Meanwhile, since the maximum depth of the video data 330 is 1, coding units 335 of the video data 330 may include a maximum coding unit having a long axis size of 16, and coding units having a long axis size of 8 since depths are deepened to one layer by splitting the maximum coding unit once.

Since the maximum depth of the video data 320 is 3, coding units 325 of the video data 320 may include a maximum coding unit having a long axis size of 64, and coding units having long axis sizes of 32, 16, and 8 since the depths are deepened to 3 layers by splitting the maximum coding unit three times. As a depth deepens, detailed information may be precisely expressed.

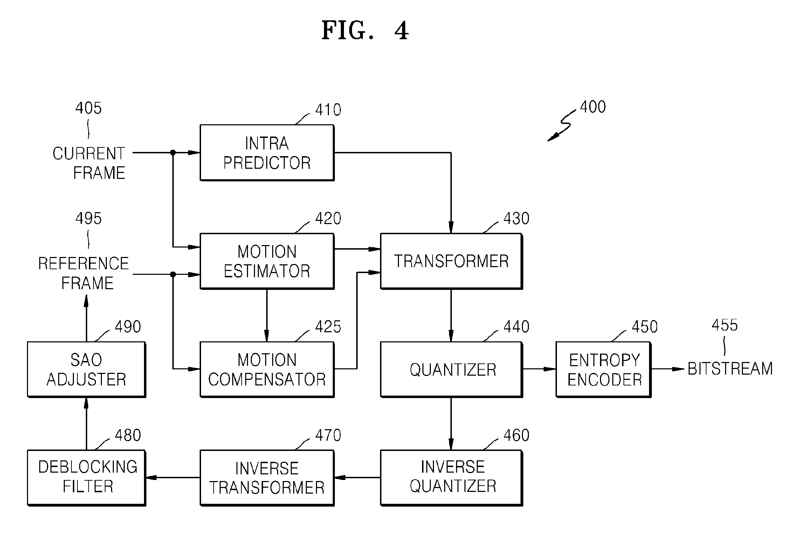

FIG. 4 is a block diagram of an image encoder 400 based on coding units, according to an embodiment of the present invention.

The image encoder 400 performs operations of the coding unit determiner 120 of the video encoding apparatus 100 to encode image data. In other words, an intra predictor 410 performs intra prediction on coding units in an intra mode, from among a current frame 405, and a motion estimator 420 and a motion compensator 425 performs inter estimation and motion compensation on coding units in an inter mode from among the current frame 405 by using the current frame 405, and a reference frame 495.

Data output from the intra predictor 410, the motion estimator 420, and the motion compensator 425 is output as a quantized transformation coefficient through a transformer 430 and a quantizer 440. The quantized transformation coefficient is reconstructed as data in a spatial domain through an inverse quantizer 460 and an inverse transformer 470, and the reconstructed data in the spatial domain is output as the reference frame 495 after being post-processed through a deblocking unit 480 and a sample adaptive offset (SAO) adjuster 490. The quantized transformation coefficient may be output as a bitstream 455 through an entropy encoder 450.

In order for the image encoder 400 to be applied in the video encoding apparatus 100, all elements of the image encoder 400, i.e., the intra predictor 410, the motion estimator 420, the motion compensator 425, the transformer 430, the quantizer 440, the entropy encoder 450, the inverse quantizer 460, the inverse transformer 470, the deblocking unit 480, and the SAO adjuster 490 perform operations based on each coding unit from among coding units having a tree structure while considering the maximum depth of each maximum coding unit.

Specifically, the intra predictor 410, the motion estimator 420, and the motion compensator 425 determines partitions and a prediction mode of each coding unit from among the coding units having a tree structure while considering the maximum size and the maximum depth of a current maximum coding unit, and the transformer 430 determines the size of the transformation unit in each coding unit from among the coding units having a tree structure.

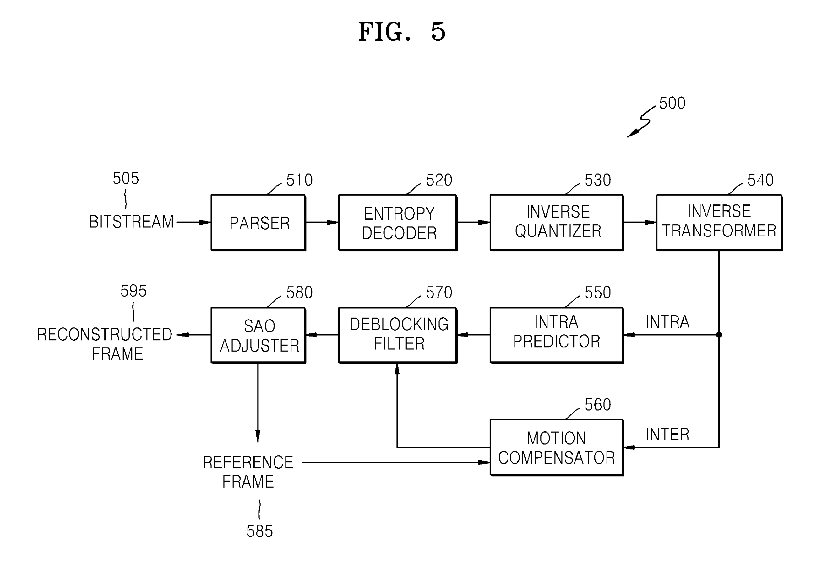

FIG. 5 is a block diagram of an image decoder 500 based on coding units, according to an embodiment of the present invention.

A parser 510 parses encoded image data to be decoded and information about encoding required for decoding from a bitstream 505. The encoded image data is output as inverse quantized data through an entropy decoder 520 and an inverse quantizer 530, and the inverse quantized data is reconstructed to image data in a spatial domain through an inverse transformer 540.

An intra predictor 550 performs intra prediction on coding units in an intra mode with respect to the image data in the spatial domain, and a motion compensator 560 performs motion compensation on coding units in an inter mode by using a reference frame 585.

The image data in the spatial domain, which passed through the intra predictor 550 and the motion compensator 560, may be output as a reconstructed frame 595 after being post-processed through a deblocking unit 570 and an SAO adjuster 580. Also, the image data that is post-processed through the deblocking unit 570 and the SAO adjuster 580 may be output as the reference frame 585.

In order to decode the image data in the image data decoder 230 of the video decoding apparatus 200, the image decoder 500 may perform operations that are performed after the parser 510.

In order for the image decoder 500 to be applied in the video decoding apparatus 200, all elements of the image decoder 500, i.e., the parser 510, the entropy decoder 520, the inverse quantizer 530, the inverse transformer 540, the intra predictor 550, the motion compensator 560, the deblocking unit 570, and the SAO adjuster 580 perform operations based on coding units having a tree structure for each maximum coding unit.

Specifically, the intra prediction 550 and the motion compensator 560 perform operations based on partitions and a prediction mode for each of the coding units having a tree structure, and the inverse transformer 540 perform operations based on a size of a transformation unit for each coding unit.

FIG. 6 is a diagram illustrating deeper coding units according to depths, and partitions, according to an embodiment of the present invention.

The video encoding apparatus 100 and the video decoding apparatus 200 use hierarchical coding units so as to consider characteristics of an image. A maximum height, a maximum width, and a maximum depth of coding units may be adaptively determined according to the characteristics of the image, or may be differently set by a user. Sizes of deeper coding units according to depths may be determined according to the predetermined maximum size of the coding unit.

In a hierarchical structure 600 of coding units, the maximum height and the maximum width of the coding units are each 64, and the maximum depth is 3. Here, a maximum depth denotes a total number of times a coding unit is split from a maximum coding unit to a minimum coding unit. Since a depth deepens along a vertical axis of the hierarchical structure 600, a height and a width of the deeper coding unit are each split. Also, a prediction unit and partitions, which are bases for prediction encoding of each deeper coding unit, are shown along a horizontal axis of the hierarchical structure 600.

In other words, a coding unit 610 is a maximum coding unit in the hierarchical structure 600, wherein a depth is 0 and a size, i.e., a height by width, is 64x64. The depth deepens along the vertical axis, and a coding unit 620 having a size of 32x32 and a depth of 1, a coding unit 630 having a size of 16x16 and a depth of 2, and a coding unit 640 having a size of 8x8 and a depth of 3 exist. The coding unit 640 having the size of 8x8 and the depth of 3 is a minimum coding unit.

The prediction unit and the partitions of a coding unit are arranged along the horizontal axis according to each depth. In other words, if the coding unit 610 having the size of 64x64 and the depth of 0 is a prediction unit, the prediction unit may be split into partitions include in the encoding unit 610, i.e. a partition 610 having a size of 64x64, partitions 612 having the size of 64x32, partitions 614 having the size of 32x64, or partitions 616 having the size of 32x32.

Similarly, a prediction unit of the coding unit 620 having the size of 32x32 and the depth of 1 may be split into partitions included in the coding unit 620, i.e. a partition 620 having a size of 32x32, partitions 622 having a size of 32x16, partitions 624 having a size of 16x32, and partitions 626 having a size of 16x16.

Similarly, a prediction unit of the coding unit 630 having the size of 16x16 and the depth of 2 may be split into partitions included in the coding unit 630, i.e. a partition having a size of 16x16 included in the coding unit 630, partitions 632 having a size of 16x8, partitions 634 having a size of 8x16, and partitions 636 having a size of 8x8.

Similarly, a prediction unit of the coding unit 640 having the size of 8x8 and the depth of 3 may be split into partitions included in the coding unit 640, i.e. a partition having a size of 8x8 included in the coding unit 640, partitions 642 having a size of 8x4, partitions 644 having a size of 4x8, and partitions 646 having a size of 4x4.

Finally, the coding unit 640 having the size of 8x8 and the depth of 3 is the minimum coding unit and a coding unit of the lowermost depth.

In order to determine the at least one coded depth of the coding units constituting the maximum coding unit 610, the coding unit determiner 120 of the video encoding apparatus 100 performs encoding for coding units corresponding to each depth included in the maximum coding unit 610.

A number of deeper coding units according to depths including data in the same range and the same size increases as the depth deepens. For example, four coding units corresponding to a depth of 2 are required to cover data that is included in one coding unit corresponding to a depth of 1. Accordingly, in order to compare encoding results of the same data according to depths, the coding unit corresponding to the depth of 1 and four coding units corresponding to the depth of 2 are each encoded.

In order to perform encoding for a current depth from among the depths, a least encoding error may be selected for the current depth by performing encoding for each prediction unit in the coding units corresponding to the current depth, along the horizontal axis of the hierarchical structure 600. Alternatively, the minimum encoding error may be searched for by comparing the least encoding errors according to depths, by performing encoding for each depth as the depth deepens along the vertical axis of the hierarchical structure 600. A depth and a partition having the minimum encoding error in the coding unit 610 may be selected as the coded depth and a partition type of the coding unit 610.

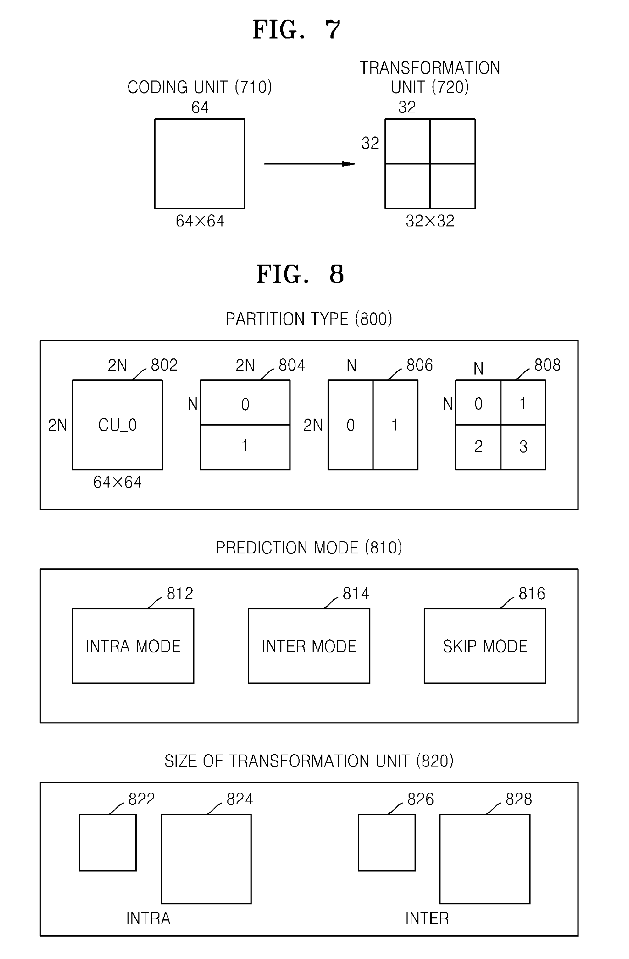

FIG. 7 is a diagram for describing a relationship between a coding unit 710 and transformation units 720, according to an embodiment of the present invention.

The video encoding apparatus 100 or the video decoding apparatus 200 encodes or decodes an image according to coding units having sizes smaller than or equal to a maximum coding unit for each maximum coding unit. Sizes of transformation units for transformation during encoding may be selected based on data units that are not larger than a corresponding coding unit.

For example, in the video encoding apparatus 100 or the video decoding apparatus 200, if a size of the coding unit 710 is 64x64, transformation may be performed by using the transformation units 720 having a size of 32x32.

Also, data of the coding unit 710 having the size of 64x64 may be encoded by performing the transformation on each of the transformation units having the size of 32x32, 16x16, 8x8, and 4x4, which are smaller than 64x64, and then a transformation unit having the least coding error may be selected.

FIG. 8 is a diagram for describing encoding information of coding units corresponding to a coded depth, according to an embodiment of the present invention.

The hierarchical symbol encoder 130 of the video encoding apparatus 100 may encode and transmit information 800 about a partition type, information 810 about a prediction mode, and information 820 about a size of a transformation unit for each coding unit corresponding to a coded depth, as information about an encoding mode.

The information 800 indicates information about a shape of a partition obtained by splitting a prediction unit of a current coding unit, wherein the partition is a data unit for prediction encoding the current coding unit. For example, a current coding unit CU_0 having a size of 2Nx2N may be split into any one of a partition 802 having a size of 2Nx2N, a partition 804 having a size of 2NxN, a partition 806 having a size of Nx2N, and a partition 808 having a size of NxN. Here, the information 800 about a partition type is set to indicate one of the partition 804 having a size of 2NxN, the partition 806 having a size of Nx2N, and the partition 808 having a size of NxN

The information 810 indicates a prediction mode of each partition. For example, the information 810 may indicate a mode of prediction encoding performed on a partition indicated by the information 800, i.e., an intra mode 812, an inter mode 814, or a skip mode 816.

The information 820 indicates a transformation unit to be based on when transformation is performed on a current coding unit. For example, the transformation unit may be a first intra transformation unit 822, a second intra transformation unit 824, a first inter transformation unit 826, or a second inter transformation unit 828.

The image data and encoding information extractor 210 of the video decoding apparatus 200 may extract and use the information 800, 810, and 820 for decoding, according to each deeper coding unit.

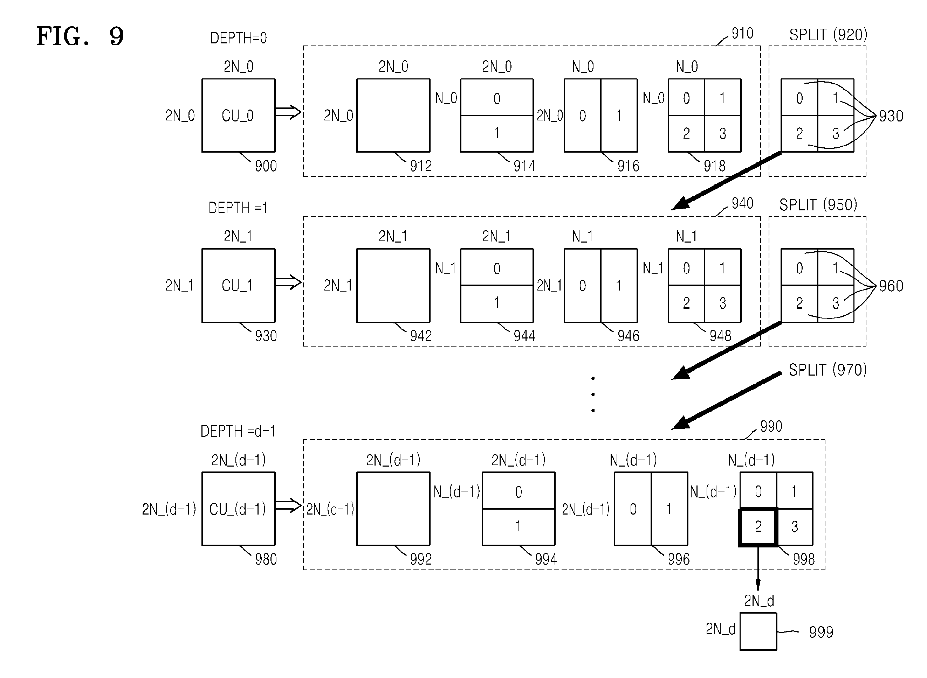

FIG. 9 is a diagram of deeper coding units according to depths, according to an embodiment of the present invention.

Split information may be used to indicate a change of a depth. The spilt information indicates whether a coding unit of a current depth is split into coding units of a lower depth.

A prediction unit 910 for prediction encoding a coding unit 900 having a depth of 0 and a size of 2N_0x2N_0 may include partitions of a partition type 912 having a size of 2N_0x2N_0, a partition type 914 having a size of 2N_0xN_0, a partition type 916 having a size of N_0x2N_0, and a partition type 918 having a size of N_0xN_0. FIG. 9 only illustrates the partition types 912 through 918 which are obtained by symmetrically splitting the prediction unit 910, but a partition type is not limited thereto, and the partitions of the prediction unit 910 may include asymmetrical partitions, partitions having a predetermined shape, and partitions having a geometrical shape.

Prediction encoding is repeatedly performed on one partition having a size of 2N_0x2N_0, two partitions having a size of 2N_0xN_0, two partitions having a size of N_0x2N_0, and four partitions having a size of N_0xN_0, according to each partition type. The prediction encoding in an intra mode and an inter mode may be performed on the partitions having the sizes of 2N_0x2N_0, N_0x2N_0, 2N_0xN_0, and N_0xN_0. The prediction encoding in a skip mode is performed only on the partition having the size of 2N_0x2N_0.

If an encoding error is smallest in one of the partition types 912 through 916, the prediction unit 910 may not be split into a lower depth.

If the encoding error is the smallest in the partition type 918, a depth is changed from 0 to 1 to split the partition type 918 in operation 920, and encoding is repeatedly performed on coding units 930 having a depth of 2 and a size of N_0xN_0 to search for a minimum encoding error.

A prediction unit 940 for prediction encoding the coding unit 930 having a depth of 1 and a size of 2N_1x2N_1 (=N_0xN_0) may include partitions of a partition type 942 having a size of 2N_1x2N_1, a partition type 944 having a size of 2N_1xN_1, a partition type 946 having a size of N_1x2N_1, and a partition type 948 having a size of N_1xN_1.

If an encoding error is the smallest in the partition type 948, a depth is changed from 1 to 2 to split the partition type 948 in operation 950, and encoding is repeatedly performed on coding units 960, which have a depth of 2 and a size of N_2xN_2 to search for a minimum encoding error.

When a maximum depth is d, split operation according to each depth may be performed up to when a depth becomes d-1, and split information may be encoded as up to when a depth is one of 0 to d-2. In other words, when encoding is performed up to when the depth is d-1 after a coding unit corresponding to a depth of d-2 is split in operation 970, a prediction unit 990 for prediction encoding a coding unit 980 having a depth of d-1 and a size of 2N_(d-1)x2N_(d-1) may include partitions of a partition type 992 having a size of 2N_(d-1)x2N_(d-1), a partition type 994 having a size of 2N_(d-1)xN_(d-1), a partition type 996 having a size of N_(d-1)x2N_(d-1), and a partition type 998 having a size of N_(d-1)xN_(d-1).

Prediction encoding may be repeatedly performed on one partition having a size of 2N_(d-1)x2N_(d-1), two partitions having a size of 2N_(d-1)xN_(d-1), two partitions having a size of N_(d-1)x2N_(d-1), four partitions having a size of N_(d-1)xN_(d-1) from among the partition types 992 through 998 to search for a partition type having a minimum encoding error.

Even when the partition type 998 has the minimum encoding error, since a maximum depth is d, a coding unit CU_(d-1) having a depth of d-1 is no longer split to a lower depth, and a coded depth for the coding units constituting a current maximum coding unit 900 is determined to be d-1 and a partition type of the current maximum coding unit 900 may be determined to be N_(d-1)xN_(d-1). Also, since the maximum depth is d and a minimum coding unit 980 having a lowermost depth of d-1 is no longer split to a lower depth, split information for the minimum coding unit 980 is not set.

A data unit 999 may be a 'minimum unit' for the current maximum coding unit. A minimum unit according to an embodiment of the present invention may be a square data unit obtained by splitting a minimum coding unit 980 by 4. By performing the encoding repeatedly, the video encoding apparatus 100 may select a depth having the least encoding error by comparing encoding errors according to depths of the coding unit 900 to determine a coded depth, and set a corresponding partition type and a prediction mode as an encoding mode of the coded depth.

As such, the minimum encoding errors according to depths are compared in all of the depths of 1 through d, and a depth having the least encoding error may be determined as a coded depth. The coded depth, the partition type of the prediction unit, and the prediction mode may be encoded and transmitted as information about an encoding mode. Also, since a coding unit is split from a depth of 0 to a coded depth, only split information of the coded depth is set to 0, and split information of depths excluding the coded depth is set to 1.

The hierarchical symbol and data extractor 220 of the video decoding apparatus 200 may extract and use the information about the coded depth and the prediction unit of the coding unit 900 to decode the partition 912. The video decoding apparatus 200 may determine a depth, in which split information is 0, as a coded depth by using split information according to depths, and use information about an encoding mode of the corresponding depth for decoding.

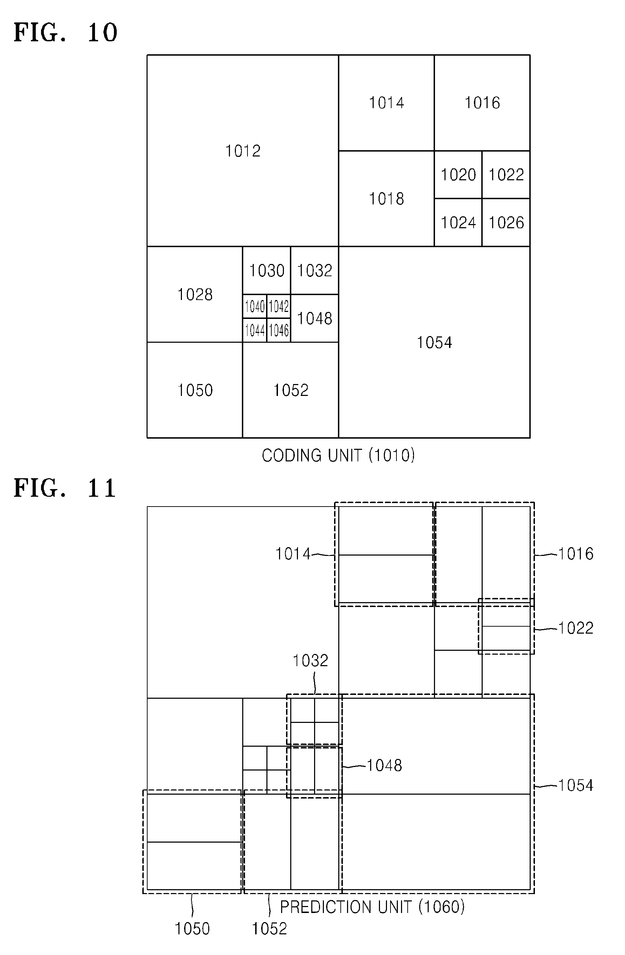

FIGS. 10 through 12 are diagrams for describing a relationship between coding units 1010, prediction units 1060, and transformation units 1070, according to an embodiment of the present invention.

The coding units 1010 are coding units having a tree structure, corresponding to coded depths determined by the video encoding apparatus 100, in a maximum coding unit. The prediction units 1060 are partitions of prediction units of each of the coding units 1010, and the transformation units 1070 are transformation units of each of the coding units 1010.

When a depth of a maximum coding unit is 0 in the coding units 1010, depths of coding units 1012 and 1054 are 1, depths of coding units 1014, 1016, 1018, 1028, 1050, and 1052 are 2, depths of coding units 1020, 1022, 1024, 1026, 1030, 1032, and 1048 are 3, and depths of coding units 1040, 1042, 1044, and 1046 are 4.

In the prediction units 1060, some encoding units 1014, 1016, 1022, 1032, 1048, 1050, 1052, and 1054 are obtained by splitting the coding units in the encoding units 1010. In other words, partition types in the coding units 1014, 1022, 1050, and 1054 have a size of 2NxN, partition types in the coding units 1016, 1048, and 1052 have a size of Nx2N, and a partition type of the coding unit 1032 has a size of NxN. Prediction units and partitions of the coding units 1010 are smaller than or equal to each coding unit.

Transformation or inverse transformation is performed on image data of the coding unit 1052 in the transformation units 1070 in a data unit that is smaller than the coding unit 1052. Also, the coding units 1014, 1016, 1022, 1032, 1048, 1050, and 1052 in the transformation units 1070 are different from those in the prediction units 1060 in terms of sizes and shapes. In other words, the video encoding and decoding apparatuses 100 and 200 may perform intra prediction, motion estimation, motion compensation, transformation, and inverse transformation individually on a data unit in the same coding unit.

Accordingly, encoding is recursively performed on each of coding units having a hierarchical structure in each region of a maximum coding unit to determine an optimum coding unit, and thus coding units having a recursive tree structure may be obtained. Encoding information may include split information about a coding unit, information about a partition type, information about a prediction mode, and information about a size of a transformation unit. Table 1 shows the encoding information that may be set by the video encoding and decoding apparatuses 100 and 200.

[Table 1]

| Split Information 0 (Encoding on Coding Unit having Size of 2Nx2N and Current Depth of d) | | | | | Split Information 1 |
|---|---|---|---|---|---|
| Prediction Mode | Partition Type | | Size of Transformation Unit | | Repeatedly Encode Coding Units having Lower Depth of d+1 |
| Intra<br>Inter<br>Skip (Only 2Nx2N) | Symmetrical Partition Type | Asymmetrical Partition Type | Split Information 0 of Transformation Unit | Split Information 1 of Transformation Unit | |
| | 2Nx2N<br>2NxN<br>Nx2N<br>NxN | 2NxnU<br>2NxnD<br>nLx2N<br>nRx2N | 2Nx2N | NxN (Symmetrical Type)<br>N/2xN/2 (Asymmetrical Type) | |

The output unit 130 of the video encoding apparatus 100 may output the encoding information about the coding units having a tree structure, and the image data and encoding information extractor 220 of the video decoding apparatus 200 may extract the encoding information about the coding units having a tree structure from a received bitstream.

Split information indicates whether a current coding unit is split into coding units of a lower depth. If split information of a current depth d is 0, a depth, in which a current coding unit is no longer split into a lower depth, is a coded depth, and thus information about a partition type, prediction mode, and a size of a transformation unit may be defined for the coded depth. If the current coding unit is further split according to the split information, encoding is independently performed on four split coding units of a lower depth.

A prediction mode may be one of an intra mode, an inter mode, and a skip mode. The intra mode and the inter mode may be defined in all partition types, and the skip mode is defined only in a partition type having a size of 2Nx2N.

The information about the partition type may indicate symmetrical partition types having sizes of 2Nx2N, 2NxN, Nx2N, and NxN, which are obtained by symmetrically splitting a height or a width of a prediction unit, and asymmetrical partition types having sizes of 2NxnU, 2NxnD, nLx2N, and nRx2N, which are obtained by asymmetrically splitting the height or width of the prediction unit. The asymmetrical partition types having the sizes of 2NxnU and 2NxnD may be respectively obtained by splitting the height of the prediction unit in 1:3 and 3:1, and the asymmetrical partition types having the sizes of nLx2N and nRx2N may be respectively obtained by splitting the width of the prediction unit in 1:3 and 3:1

The size of the transformation unit may be set to be two types in the intra mode and two types in the inter mode. In other words, if split information of the transformation unit is 0, the size of the transformation unit may be 2Nx2N, which is the size of the current coding unit. If split information of the transformation unit is 1, the transformation units may be obtained by splitting the current coding unit. Also, if a partition type of the current coding unit having the size of 2Nx2N is a symmetrical partition type, a size of a transformation unit may be NxN, and if the partition type of the current coding unit is an asymmetrical partition type, the size of the transformation unit may be N/2xN/2.

The encoding information about coding units having a tree structure may include at least one of a coding unit corresponding to a coded depth, a prediction unit, and a minimum unit. The coding unit corresponding to the coded depth may include at least one of a prediction unit and a minimum unit containing the same encoding information. Accordingly, it is determined whether adjacent data units are included in the same coding unit corresponding to the coded depth by comparing encoding information of the adjacent data units. Also, a corresponding coding unit corresponding to a coded depth is determined by using encoding information of a data unit, and thus a distribution of coded depths in a maximum coding unit may be determined.

Accordingly, if a current coding unit is predicted based on encoding information of adjacent data units, encoding information of data units in deeper coding units adjacent to the current coding unit may be directly referred to and used.

Alternatively, if a current coding unit is predicted based on encoding information of adjacent data units, data units adjacent to the current coding unit are searched using encoded information of the data units, and the searched adjacent coding units may be referred for predicting the current coding unit.

FIG. 13 is a diagram for describing a relationship between a coding unit, a prediction unit or a partition, and a transformation unit, according to encoding mode information of Table 1.

A maximum coding unit 1300 includes coding units 1302, 1304, 1306, 1312, 1314, 1316, and 1318 of coded depths. Here, since the coding unit 1318 is a coding unit of a coded depth, split information may be set to 0. Information about a partition type of the coding unit 1318 having a size of 2Nx2N may be set to be one of a partition type 1322 having a size of 2Nx2N, a partition type 1324 having a size of 2NxN, a partition type 1326 having a size of Nx2N, a partition type 1328 having a size of NxN, a partition type 1332 having a size of 2NxnU, a partition type 1334 having a size of 2NxnD, a partition type 1336 having a size of nLx2N, and a partition type 1338 having a size of nRx2N.

Transformation unit split information TU size flag may be a type of a transformation index, and a size of a transformation unit corresponding to a transformation index may vary according to a prediction unit type or partition type of a coding unit.

For example, when the partition type is set to be symmetrical, i.e. the partition type 1322, 1324, 1326, or 1328, a transformation unit 1342 having a size of 2Nx2N is set if a TU size flag of a transformation unit is 0, and a transformation unit 1344 having a size of NxN is set if a TU size flag is 1.

When the partition type is set to be asymmetrical, i.e., the partition type 1332, 1334, 1336, or 1338, a transformation unit 1352 having a size of 2Nx2N is set if a TU size flag is 0, and a transformation unit 1354 having a size of N/2xN/2 is set if a TU size flag is 1.

Referring to FIG. 13, the TU size flag is a flag having a value or 0 or 1, but the TU size flag is not limited to 1 bit, and a transformation unit may be hierarchically split having a tree structure while the TU size flag increases from 0. The TU size flag may be used as an example of a transformation index.

In this case, the size of a transformation unit that has been actually used may be expressed by using a TU size flag of a transformation unit, together with a maximum size and minimum size of the transformation unit. The video encoding apparatus 100 is capable of encoding maximum transformation unit size information, minimum transformation unit size information, and a maximum TU size flag. The result of encoding the maximum transformation unit size information, the minimum transformation unit size information, and the maximum TU size flag may be inserted into an SPS. The video decoding apparatus 200 may decode video by using the maximum transformation unit size information, the minimum transformation unit size information, and the maximum TU size flag.

For example, if the size of a current coding unit is 64x64 and a maximum transformation unit size is 32x32, then the size of a transformation unit may be 32x32 when a TU size flag is 0, may be 16x16 when the TU size flag is 1, and may be 8x8 when the TU size flag is 2.

As another example, if the size of the current coding unit is 32x32 and a minimum transformation unit size is 32x32, then the size of the transformation unit may be 32x32 when the TU size flag is 0. Here, the TU size flag cannot be set to a value other than 0, since the size of the transformation unit cannot be less than 32x32.

As another example, if the size of the current coding unit is 64x64 and a maximum TU size flag is 1, then the TU size flag may be 0 or 1. Here, the TU size flag cannot be set to a value other than 0 or 1.

Thus, if it is defined that the maximum TU size flag is 'MaxTransformSizeIndex', a minimum transformation unit size is 'MinTransformSize', and a transformation unit size is 'RootTuSize' when the TU size flag is 0, then a current minimum transformation unit size 'CurrMinTuSize' that can be determined in a current coding unit, may be defined by Equation (1):

$$\text{CurrMinTuSize} = \max(\text{MinTransformSize}, \text{RootTuSize}/(2^{\wedge}\text{MaxTransformSizeIndex}))$$

$$\cdots\cdots\cdots \quad (1)$$

Compared to the current minimum transformation unit size 'CurrMinTuSize' that can be determined in the current coding unit, a transformation unit size 'RootTuSize' when the TU size flag is 0 may denote a maximum transformation unit size that can be selected in the system. In Equation (1), 'RootTuSize/(2^MaxTransformSizeIndex)' denotes a transformation unit size when the transformation unit size 'RootTuSize', when the TU size flag is 0, is split a number of times corresponding to the maximum TU size flag, and 'MinTransformSize' denotes a minimum transformation size. Thus, a smaller value from among 'RootTuSize/(2^MaxTransformSizeIndex)' and 'MinTransformSize' may be the current minimum transformation unit size 'CurrMinTuSize' that can be determined in the current coding unit.

The maximum transformation unit size RootTuSize may vary according to the type of a prediction mode.

For example, if a current prediction mode is an inter mode, then 'RootTuSize' may be determined by using Equation (2) below. In Equation (2), 'MaxTransformSize' denotes a maximum transformation unit size, and 'PUSize' denotes a current prediction unit size.

$$\text{RootTuSize} = \min(\text{MaxTransformSize}, \text{PUSize}) \cdots\cdots\cdots \quad (2)$$

That is, if the current prediction mode is the inter mode, the transformation unit size 'RootTuSize' when the TU size flag is 0, may be a smaller value from among the maximum transformation unit size and the current prediction unit size.

If a prediction mode of a current partition unit is an intra mode, 'RootTuSize' may be determined by using Equation (3) below. In Equation (3), 'PartitionSize' denotes the size of the current partition unit.

$$RootTuSize = min(MaxTransformSize, PartitionSize) ..........(3)$$

That is, if the current prediction mode is the intra mode, the transformation unit size 'RootTuSize' when the TU size flag is 0 may be a smaller value from among the maximum transformation unit size and the size of the current partition unit.

However, the current maximum transformation unit size 'RootTuSize' that varies according to the type of a prediction mode in a partition unit is just an example and the present invention is not limited thereto.

The maximum encoding unit including coding units having the tree structure described with reference to FIGS. 1 through 13 is diversely referred to as a coding block unit, a block tree, a root block tree, a coding tree, a coding root or a tree trunk.

A scalable video encoding method and a scalable video decoding method based on coding units having the tree structure will now be described with reference to FIGS. 14 through 22.

FIG. 14 is a block diagram of a scalable video encoding apparatus 1400, according to an embodiment of the present invention.

The scalable video encoding apparatus 1400 according to an embodiment of the present invention includes a lower layer encoder 1410, a higher layer encoder 1420, and an output unit 1430.

The lower layer encoder 1410 according to an embodiment encodes a lower layer image among images classified as a plurality of layers.

The scalable video encoding apparatus 1400 according to an embodiment of the present invention may encode the lower layer image based on the coding units having the tree structure described with reference to FIGS. 1 through 13. That is, the lower layer encoder 1410 may split the lower layer image into maximum coding units, determine a coding mode based on completely split coding units among the coding units hierarchically split from the maximum coding units, and output encoded data.

As described with reference to FIGS. 1 through 13, the maximum coding units may be formed by spatially splitting a video image, and each may be split into a plurality of coding units. When it is determined whether each of the coding units is split into smaller coding units, the coding units may be determined individually and independently from adjacent coding units.

The higher layer encoder 1420 according to an embodiment of the present invention encodes a higher layer image among the images classified as the plurality of layers.

The higher layer encoder 1420 may output data of the encoded higher layer image based on coding units having a tree structure of the higher layer image. Also, the higher layer encoder 1420 may determine a scalable coding mode that is information indicating whether to refer to the lower layer image so as to encode the higher layer image. The higher layer encoder 1420 may predict the higher layer image based on the encoding information of the lower layer image based on the determined scalable coding mode and encode the higher layer image.

The output unit 1430 according to an embodiment of the present invention may output the coding mode and a predicted value of the lower layer image predicted value according to an encoding result obtained by the lower layer encoder 1410. The output unit 1430 may output the data encoded by the lower layer encoder 1410 by performing encoding based on the coding units having the tree structure for each of the maximum coding units.

The output unit 1430 may output information on the scalable coding mode of the higher layer image according to the encoding result based on the scalable coding mode determined by the higher layer encoder 1420. Likewise, the output unit 1430 may selectively output the encoding information according to an encoding result obtained by the higher layer encoder 1420 based on the coding units having the tree structure for each of the maximum coding units.

The encoding information of the lower layer image that may be referred to by the higher layer image may be at least one of various information determined by encoding of the lower layer image, such as the encoded coding mode, the predicted value, syntax, a reconstructed value, etc. Information on the encoded coding mode according to an embodiment may include information on structure of coding units and prediction information according to a prediction mode. The information on structure of the coding units may include at least one of depths having a current coding unit and a group format of a coding unit configured as the current coding unit. The prediction information may include at least one of a partition shape for intra prediction, an intra index, a partition shape for inter prediction, a motion vector, a reference index, and non-zero coefficient location information (last coefficient location information). The predicted value according to an embodiment may include at least one of a quantized transformation coefficient, a differential value of coefficients according to the inter prediction, and residual data.

The higher layer encoder 1420 may encode the higher layer image based on at least one of the information on structure of the coding units and information on structure of transformation units included in the coding units from among the coding mode of the lower layer image. The information on structure of the transformation units according to an embodiment may include at least one of transformation depths of the current coding unit and a transformation index.

The higher layer encoder 1420 may determine the coding mode of the higher layer image based on at least one of a prediction mode, a partition type, motion information, and intra information among the coding mode of the lower layer image.

The higher layer encoder 1420 may determine the coding mode of the higher layer image based on loop filtering related information, non-zero coefficient location information, a reconstructed predicted value, and reconstructed texture information among the coding mode of the lower layer image.

For example, the reconstructed predicted value of a current data unit may be a predicted value determined by using a value of a spatially neighboring data unit having the current data unit in an intra mode. The predicted value of the current data unit reconstructed by inter prediction may be a predicted value generated by performing motion compensation using an earlier reconstructed reference frame. In this regard, for example, a predicted value of a higher layer data unit may be determined by using a reconstructed predicted value of a lower layer data unit disposed corresponding to the higher layer data unit in an image generated by scaling a lower layer reconstructed image. As another example, the predicted value of the higher layer data unit may be determined by using a value obtained by scaling the reconstructed predicted value of the lower layer data unit disposed corresponding to the higher layer data unit in the lower layer reconstructed image.

The higher layer encoder 1420 may encode the higher layer image based on the determined coding mode of the higher layer image.

The higher layer encoder 1420 according to an embodiment may determine at least one of residual information and a transformation coefficient of the higher layer image based on residual information and a transformation coefficient among the encoding information of the lower layer image.

The higher layer encoder 1420 according to an embodiment may determine a reconstructed value of the higher layer image based on the reconstructed value of a reconstructed image generated by performing intra prediction or inter prediction among the encoding information of the lower layer image.

The higher layer encoder 1420 according to an embodiment may determine coding syntax elements for the higher layer image by using coding syntax elements determined by encoding the lower layer image.

As described above, the higher layer encoder 1420 may encode the higher layer image based on the encoding information of the higher layer image determined by using the encoding information of the lower layer image according to the scalable coding mode.

The higher layer encoder 1420 according to an embodiment may determine the scalable coding mode for each predetermined data unit of the higher layer image. For example, the scalable coding mode may be individually determined for each picture sequence. As another example, the scalable coding mode may be individually determined for each picture. As another example, the scalable coding mode may be individually determined for each frame. As another example, the scalable coding mode may be individually determined for each tile. As another example, the scalable coding mode may be individually determined for each maximum coding unit. As another example, the scalable coding mode may be individually determined for each coding unit. As another example, the scalable coding mode may be individually determined for a predetermined group of each coding unit.

That is, the higher layer encoder 1420 according to an embodiment may or may not perform inter-layer prediction according to the corresponding scalable coding mode for each data unit.

The output unit 1430 according to an embodiment may output the coding mode of the lower layer image and the predicted value.

The output unit 1430 according to an embodiment may output different information for the higher layer image that is output according to the scalable coding mode.

For example, the higher layer encoder 1420 may infer or predict the encoding information of the higher layer image from the encoding information of the lower layer image according to a first scalable coding mode of the higher layer image. Alternatively, the higher layer encoder 1420 may infer or predict a part of the encoding information of the higher layer image from the coding mode of the lower layer image according to the first scalable coding mode.

In this case, the output unit 1430 may output the encoding information excluding the information inferred from the lower layer information from the encoding information of the higher layer image according to the first scalable coding mode. In this case, a receiving end may infer or predict a non-transmitted coding mode of the higher layer image based on the encoding information of the lower layer image while using the encoding information of the higher layer image as directly received.

As another example, the higher layer encoder 1420 may infer or predict the encoding information of the higher layer image from the encoding information of the lower layer image according to a second scalable coding mode of the higher layer image.

In this case, the output unit 1430 may output only the information on the scalable coding mode of the higher layer image and may not transmit the encoding information of the higher layer image according to the second scalable coding mode. In this case, the receiving end may infer or predict the encoding information of the higher layer image from the encoding information including at least one of the coding mode, predicted value, syntax, and reconstructed value of the lower layer image.

The higher layer encoder 1420 according to an embodiment may determine a data unit of the lower layer image that may be referred to by a data unit of the higher layer image based on the determined scalable coding mode. In other words, a lower layer data unit mapped to a location corresponding to a location of a higher layer data unit may be determined. The higher layer encoder 1420 may predict and encode the higher layer image by referring to encoding information including at least one of a coding mode, a predicted value, syntax, and a reconstructed value of the determined lower layer data unit.

As described with reference to FIGS. 1 through 13, the data units of the lower layer image and the higher layer image may include at least one of the maximum coding unit of each of the higher and lower layer images, the coding unit, the prediction unit included in the coding unit, the transformation unit, and the minimum unit.

The higher layer encoder 1420 according to an embodiment may determine the data unit of the lower layer image having the same type as that of a current data unit of the higher layer image. For example, the maximum coding unit of the higher layer image may refer to the maximum coding unit of the lower layer image. The coding unit of the higher layer image may refer to the coding unit of the lower layer image.

The higher layer encoder 1420 according to an embodiment may determine a data unit group of the lower layer image having the same group type as that of a current data unit group of the higher layer image. For example, a group of the coding unit of the higher layer image may refer to a group of the coding unit of the lower layer image. A group of the transformation unit of the higher layer image may refer to a group of the transformation unit of the lower layer image. The current data unit group of the higher layer image may be encoded by using the encoding information that may be referred to by the data unit group of the lower layer image.

The higher layer encoder 1420 may perform scalable encoding on slices or tiles that are image data units. For example, the higher layer encoder 1420 may encode a current slice of the higher layer image by referring to encoding information of a slice of the lower layer image including a location corresponding to the current slice of the higher layer image. Alternatively, the higher layer encoder 1420 may encode a current tile of the higher layer image by referring to information of a tile of the lower layer image including a location corresponding to the current tile of the higher layer image.

The higher layer encoder 1420 may compare samples between the higher and lower layer images according to accuracy of a sample of a sub-pixel level so as to determine the data unit of the lower layer image corresponding to the current data unit of the higher layer image. For example, a sample location of the lower layer image corresponding to the higher layer image at a sample location of a 1/12 pixel level may be searched for. In this case, in a two times up-sampling between the higher and lower layer images, the accuracy of the sample of sub-pixel levels at a 1/4 pixel location and a 3/4 pixel location is necessary. In a case of a 3/2 times up-sampling between the higher and lower layer images, the sample accuracy of sub-pixel levels at a 1/3 pixel location and a 2/3 pixel location is necessary.

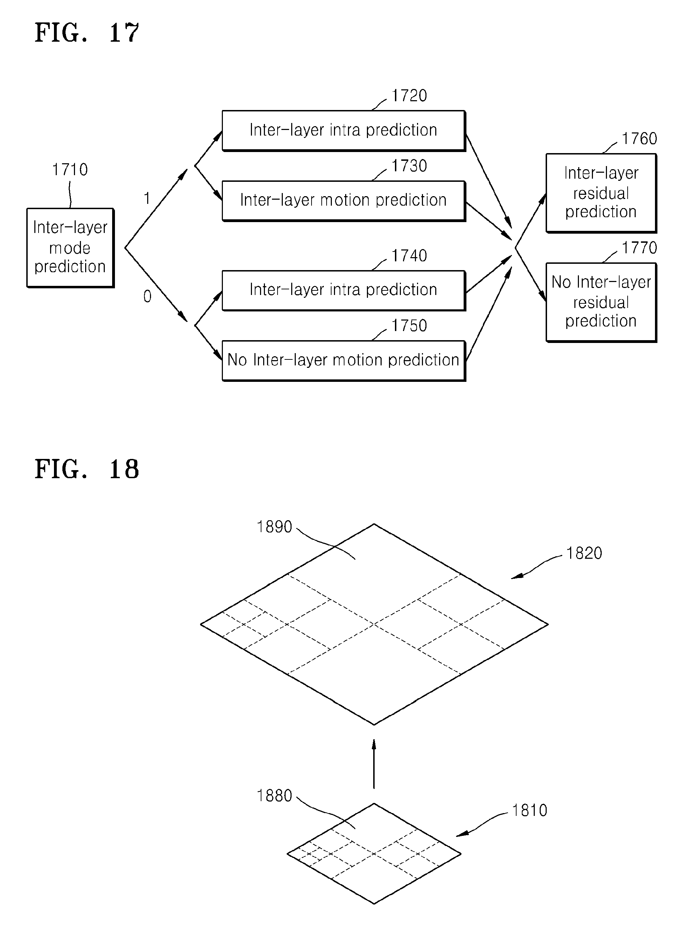

An embodiment relating to mapping of the data units between the lower and higher layer images will be described with reference to FIG. 18 later.

The higher layer encoder 1420 may determine a data unit corresponding to the current data unit of the higher layer image and having a different type from that of a current data unit group from among the lower layer image. For example, the coding unit of the higher layer image may refer to the maximum coding unit of the lower layer image. The prediction unit of the higher layer image may refer to the coding unit of the lower layer image. The current data unit of the higher layer image may be encoded by referring to the encoding information of the data unit of the lower layer image.

The higher layer encoder 1420 may determine a data unit group corresponding to the current data unit group of the higher layer image and having a different type from that of the current data unit group from among the lower layer image. For example, a group of prediction units of the higher layer image may refer to a group of the coding units of the lower layer image. A group of transformation units of the higher layer image may refer to a group of the coding units of the lower layer image. The current data unit group of the higher layer image may be encoded by referring to encoding information of a data unit group that is different from that of the lower layer image.

In a case where an inter-layer prediction mode is determined for the current data unit of the higher layer image, the higher layer encoder 1420 may perform inter-layer prediction that encodes a part of lower data units included in the current data unit by referring to the lower layer image and predict and encode the remaining part of the lower data units within the same layer as the higher layer image.

The higher layer encoder 1420 may refine the encoding information inferred from the lower layer image and determine the encoding information of the higher layer image by referring to the adjusted encoding information. The higher layer image may be reconstructed by using the determined encoding information of the higher layer image. Refinement information for minutely refining the encoding information inferred from the lower layer image may be encoded.

The scalable video encoding apparatus 1400 according to an embodiment may encode the lower and higher layer images based on the coding units having the tree structure, and thus the scalable video encoding apparatus 1400 may be related to the video encoding apparatus 100 according to an embodiment.

For example, the lower layer encoder 1410 of the scalable video encoding apparatus 1400 may encode the lower layer image based on the coding units having the tree structure according to operations of the maximum coding unit splitter 110, the coding unit determiner 120, and the output unit 130 of the video encoding apparatus 100. The coding unit determiner 120 may determine the coding mode with respect to the data units such as the coding unit, the prediction unit, the transformation unit, and a partition of the lower layer image. Similarly to the output unit 130, the output unit 1430 may output the encoding information including the coding mode determined for each data unit of the lower layer image and the encoded predicted value.

For example, the higher layer encoder 1420 may perform encoding according to the operations of the maximum coding unit splitter 110, the coding unit determiner 120, and the output unit 130. Although the encoding operation of the higher layer encoder 1420 is similar to an operation of the coding unit determiner 120, the encoding information of the lower layer image may be referred to so as to determine the encoding information for the higher layer image based on the scalable coding mode. The output unit 1430 may not selectively encode the encoding information of the higher layer image based on the scalable coding mode although the operation of the output unit 1430 is similar to an operation of the output unit 130.

The scalable video encoding apparatus 1400 according to an embodiment may include a central processor (not shown) that generally controls the higher layer encoder 1410, the higher layer decoder 1420, and the output unit 1430. Alternatively, the higher layer encoder 1410, the higher layer decoder 1420, and the output unit 1430 may operate by their respective processors (not shown), and the scalable video encoding apparatus 1400 may generally operate according to interactions of the processors (not shown). Alternatively, the higher layer encoder 1410, the higher layer decoder 1420, and the output unit 1430 may be controlled according to the control of an external processor (not shown) of the scalable video encoding apparatus 1400.

The scalable video encoding apparatus 1400 according to an embodiment may include one or more data storage units (not shown) in which input and output data of the higher layer encoder 1410, the higher layer decoder 1420, and the output unit 1430 is stored. The video encoding apparatus 100 may include a memory control unit (not shown) that observes data input and output of the data storage units (not shown).

The scalable video encoding apparatus 1400 according to an embodiment may operate in connection with an internal video encoding processor or an external video encoding processor so as to output video encoding results, thereby performing a video encoding operation including transformation. The internal video encoding processor of the scalable video encoding apparatus 1400 according to an embodiment may be implemented by a central processor a graphic processor as well as a separate processor.

FIG. 15 is a block diagram of a scalable video decoding apparatus 1500, according to an embodiment of the present invention.

The scalable video decoding apparatus 1500 according to an embodiment includes a parsing unit 1510, a lower layer decoder 1520, and a higher layer decoder 1530.

The scalable video decoding apparatus 1500 may receive a bitstream storing encoded video data. The parsing unit 1510 may parse encoding information of a lower layer image and a scalable coding mode of a higher layer image from the received bitstream.

The lower layer decoder 1520 may decode the lower layer image using the parsed encoding information of the lower layer image. In a case where the scalable video decoding apparatus 1500 decodes an image based on coding units having a tree structure, the lower layer decoder 1520 may perform decoding based on the coding units having the tree structure for each maximum coding unit of the lower layer image.

The higher layer decoder 1530 may decode the higher layer image by performing prediction on the higher layer image by referring to encoding information of the higher layer image, i.e. encoding information, according to the parsed information on scalable coding mode of the higher layer image. Likewise, the higher layer decoder 1530 may perform decoding based on the coding units having the tree structure for each maximum coding unit of the higher layer image.

For example, the higher layer decoder 1530 may determine a coding mode of the higher layer image by referring to at least one of information on structure of coding units and information on structure of transformation units included in the coding units from among a coding mode of the lower layer image.

For example, the higher layer decoder 1530 may determine the coding mode of the higher layer image by referring to at least one of prediction mode information, partition type information, motion information, and intra information from among the coding mode of the lower layer image.

For example, the higher layer decoder 1530 may determine the coding mode of the higher layer image by referring to at least one of loop filtering related information, non-zero coefficient location information, reconstructed prediction information, and reconstructed texture information from among the coding mode of the lower layer image.

The higher layer decoder 1530 may decode the higher layer image based on the determined coding mode of the higher layer image by referring to the coding mode of the lower layer image.

For example, the higher layer decoder 1530 may determine a predicted value of the higher layer image by referring to at least one of residual information, coefficient information, and a reconstructed predicted value from among the coding mode of the lower layer image. The higher layer decoder 1530 may decode the higher layer image based on the determined predicted value of the higher layer image.

The parsing unit 1510 may parse information excluding the information inferred from the coding mode of the lower layer image as the coding mode of the higher layer image based on a first scalable coding mode. In this case, the higher layer decoder 1530 may infer or predict non-parsed information regarding the coding mode of the higher layer image from the coding mode of the lower layer image.

Alternatively, the parsing unit 1510 may parse information excluding the information inferred from the predicted value of the lower layer image as the predicted value of the higher layer image based on the first scalable coding mode. In this case, the higher layer decoder 1530 may infer or predict non-parsed information regarding the predicted value of the higher layer image from the predicted value of the lower layer image.

The parsing unit 1510 may parse only scalable coding mode information indicating that the higher layer image is a second scalable coding mode. In this case, the higher layer decoder 1530 may infer or predict the coding information of the higher layer image from the coding information of the lower layer image.

The higher layer decoder 1530 may determine a data unit of the lower layer image that may be referred to by a data unit of the higher layer image according to the information on scalable coding mode of the higher layer image parsed from the bitstream. That is, the data unit of the lower layer image mapped to a location corresponding to a location of the data unit of the higher layer image may be determined. The higher layer decoder 1530 may decode the higher layer image by referring to encoding information of the determined data unit of the lower layer image. The higher layer image may be decoded by predicting based on coding units having a tree structure.

The higher layer decoder 1530 may search for a sample location of the lower layer image corresponding to a sample of the higher layer image according to a sample accuracy of a sub-pixel level so as to determine the data unit of the lower layer image corresponding to a current data unit of the higher layer image.

The higher layer decoder 1530 may determine the data unit of the lower layer image having the corresponding same type as that of the current data unit of the higher layer image. The higher layer decoder 1530 may determine encoding information of the current data unit of the higher layer image by referring to encoding information of the determined data unit of the lower layer image and decode the current data unit by using the determined encoding information of the current data unit.

The higher layer decoder 1530 may determine a data unit group of the lower layer image having the corresponding same group type as a current data unit group of the higher layer image. The higher layer decoder 1530 may determine encoding information of the current data unit group of the higher layer image by referring to encoding information of the determined data unit group of the lower layer image and decode the current data unit group by using the encoding information of the current data unit group.

The higher layer decoder 1530 may determine at least one of current slice information and tile information of the higher layer image by referring to at least one of current slice information and tile information of the lower layer image.

The higher layer decoder 1530 may determine a data unit of the lower layer image having a corresponding different type from that of the current data unit of the higher layer image and determine encoding information of the current data unit of the higher layer image by referring to the encoding information of the data unit of the lower layer image. For example, encoding information of a current maximum coding unit of the higher layer image may be determined by using encoding information of a predetermined coding unit of the lower layer image as it is.

The higher layer decoder 1530 may determine the data unit group of the lower layer image having a corresponding different type from that of the current data unit group of the higher layer image and determine encoding information of the current data unit group of the higher layer image by referring to the encoding information of the data unit group of the lower layer image. For example, encoding information of a current maximum coding unit group of the higher layer image may be determined by using encoding information of a predetermined coding unit group of the lower layer image as it is.

In a case where an inter-layer prediction mode is determined for the current data unit of the higher layer image, the higher layer decoder 1530 may decode a part of lower data units included in the current data unit by referring to the lower layer image and decode the remaining part of the lower data units within the same layer as the higher layer image.

The higher layer decoder 1530 may correct the encoding information inferred from the lower layer image and determine the encoding information of the higher layer image by referring to the corrected encoding information. The higher layer decoder 1530 may restore the higher layer image by using the determined encoding information of the higher layer image. The parsing unit 1510 may parse refinement information. The higher layer decoder 1530 may refine the encoding information inferred from the lower layer image based on the parsed refinement information.

The scalable video decoding apparatus 1500 according to an embodiment may decode the lower and higher layer images based on the coding units having the tree structure, and thus the scalable video decoding apparatus 1500 may be related to the video decoding apparatus 120 according to an embodiment.

For example, the parsing unit 1510 of the scalable video decoding apparatus 1500 may receive a bitstream and parse the encoding information of the lower layer image and the encoding information of the higher layer image according to operations of the receiver 210 and the image data and encoding information extractor 220 of the video decoding apparatus 200. The parsing unit 1510 may parse encoding information with respect to the data units such as the coding unit, a prediction unit, a transformation unit, and a partition of the lower layer image. However, the parsing unit 1510 may not selectively parse the encoding information of the higher layer image based on scalable encoding.

For example, the lower layer decoder 1520 may decode the lower layer image based on coding units having a tree structure by using the parsed encoding information similarly to the operation of the image data decoder 230 of the video encoding apparatus 100.

Similarly to the operation of the image data decoder 230 of the video encoding apparatus 100, the higher layer decoder 1530 may decode the higher layer image based on the coding units having the tree structure by using the parsed encoding information. However, the higher layer decoder 1530 may determine the encoding information for the higher layer image by referring to the encoding information of the lower layer image based on the scalable coding mode to perform decoding.

The scalable video decoding apparatus 1500 according to an embodiment may include a central processor (not shown) that generally controls the parsing unit 1510, the lower layer decoder 1520, and the higher layer decoder 1530. Alternatively, the parsing unit 1510, the lower layer decoder 1520, and the higher layer decoder 1530 may operate by their respective processors (not shown), and the scalable video decoding apparatus 1500 may generally operate according to interactions of the processors (not shown). Alternatively, the parsing unit 1510, the lower layer decoder 1520, and the higher layer decoder 1530 may be controlled according to the control of an external processor (not shown) of the scalable video decoding apparatus 1500.

The scalable video decoding apparatus 1500 according to an embodiment may include one or more data storage units (not shown) in which input and output data of the scalable video decoding apparatus 1500 is stored. The scalable video decoding apparatus 1500 may include a memory control unit (not shown) that observes data input and output of the data storage units (not shown).

The scalable video decoding apparatus 1500 according to an embodiment may operate in connection with an internal video encoding processor or an external video encoding processor so as to restore video through video decoding, thereby performing a video decoding operation including inverse transformation. The internal video encoding processor of the scalable video decoding apparatus 1500 according to an embodiment may be implemented by a central processor or a graphic processor as well as a separate processor.

The scalable video encoding apparatus 1400 or the scalable video decoding apparatus 1500 according to an embodiment may determine an inter-layer prediction method for each sequence, slice, or picture. For example, an inter-layer prediction method for a first picture (or sequence or slice) and an inter-layer prediction method for a second picture may be separately determined.

In an inferred inter-layer prediction, encoding information of a higher layer data unit may be predicted by referring to two or more pieces of encoding information of a lower layer data unit. That is, two or more pieces of encoding information that is to be referred to are determined. For example, the encoding information of the higher layer data unit may be determined by directly using a series of encoding information determined for the lower layer data unit. In a case where the scalable video encoding apparatus 1400 performs the inferred inter-layer prediction on the higher layer data unit, the scalable video decoding apparatus 1500 may also determine a lower layer data unit corresponding to the higher layer image and then determine the encoding information of the higher layer data unit by directly using a predetermined series of encoding information of the lower layer data unit.

For the inter-layer prediction, the encoding information of the lower layer data unit may be used in a corrected format or with lower accuracy. For example, to predict a motion vector of the higher layer data unit, a motion vector of a lower layer partition may be used with lower accuracy of a specific pixel level like an integer pixel level or a sub-pixel level of a 1/2 pixel level. As another example, motion vectors of a plurality of lower layer partitions may be merged into one motion vector and then used as the motion vector of the higher layer data unit.

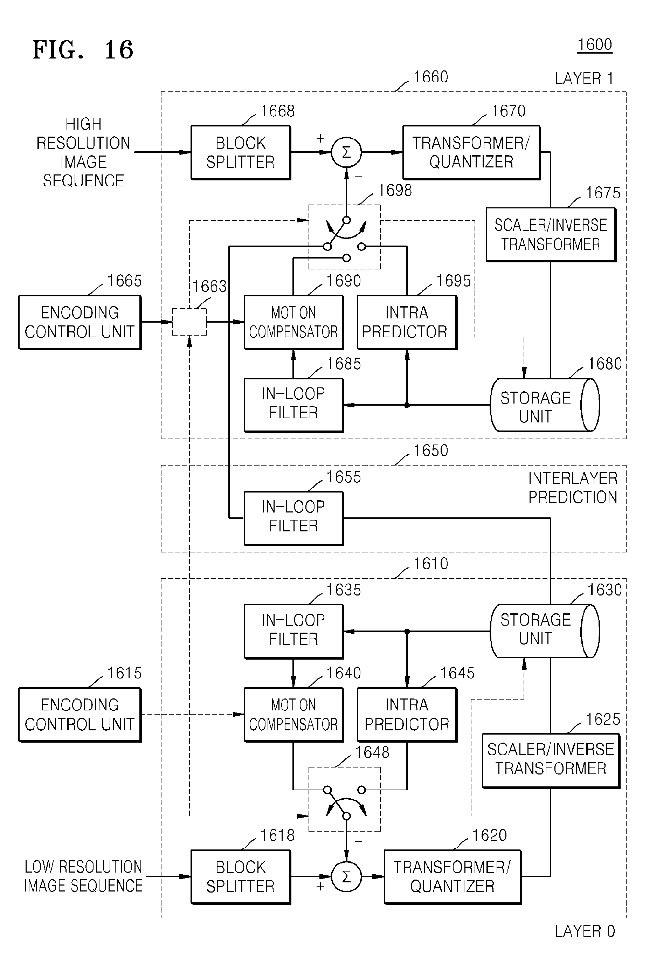

The inter-layer prediction method of the scalable video encoding apparatus 1400 and the scalable video decoding apparatus 1500 will now be described in detail with reference to FIGS. 16 through 22.

FIG. 16 is a block diagram of a scalable video encoding system 1600, according to an embodiment of the present invention.

The scalable video encoding system 1600 may include a lower layer encoding end 1610, a higher layer encoding end 1660, and an inter-layer prediction end 1650 between the lower layer encoding end 1610 and the higher layer encoding end 1660. The lower layer encoding end 1610 and the higher layer encoding end 1660 may illustrate detailed structures of the lower layer encoder 1410 and the higher layer encoder 1420, respectively.

A scalable video encoding method may classify multilayer images according to a temporal characteristic and a quality characteristic such as image quality as well as a spatial characteristic such as resolution. For convenience of description, a case where the scalable video encoding system 1600 separately encodes a low resolution image to a lower layer image and a high resolution image to a higher layer image according to image resolution will now be described.

The lower layer encoding end 1610 receives an input of a low resolution image sequence and encodes each low resolution image of the low resolution image sequence. The higher layer encoding end 1660 receives an input of a high resolution image sequence and encodes each high resolution image of the high resolution image sequence. Common operations performed by both the lower layer encoding end 1610 and the higher layer encoding end 1660 will be concurrently described later.

Block splitters 1618 and 1668 split the input images (the low resolution image and the high resolution image) into maximum coding units, coding units, prediction units, and transformation units. To encode the coding units output from the block splitters 1618 and 1668, intra prediction or inter prediction may be performed for each prediction unit of the coding units. Prediction switches 1648 and 1698 may perform inter prediction by referring to a previously reconstructed image output from motion compensators 1640 and 1690 or may perform intra prediction by using a neighboring prediction unit of a current prediction unit within a current input image output from intra predictors 1645 and 1695, according to whether a prediction mode of each prediction unit is an intra prediction mode or an inter prediction mode. Residual information may be generated for each prediction unit through inter prediction.

Residual information between the prediction units and peripheral images are input to transformers/quantizers 1620 and 1670 for each prediction unit of the coding units. The transformers/quantizers 1620 and 1670 may perform transformation and quantization for each transformation unit and output quantized transformation coefficients based on transformation units of the coding units.

Sealers/inverse transformers 1625 and 1675 may perform scaling and inverse transformation on the quantized coefficients for each transformation unit of the coding units again and generate residual information of a spatial domain. In a case where the prediction switches 1648 and 1698 is controlled to the inter mode, the residual information may be combined with the previous reconstructed image or the neighboring prediction unit so that a reconstructed image including the current prediction unit may be generated and a current reconstructed image may be stored in storage units 1630 and 1680. The current reconstructed image may be transferred to the intra predictors 1645 and 1695 and the motion compensators 1640 and 1690 again according to a prediction mode of a prediction unit that is to be encoded next.

In particular, in the inter mode, in-loop filters 1635 and 1685 may perform at least one of deblocking filtering, sample adaptive offset (SAO) operation, and adaptive loop filtering (ALF) on the current reconstructed image stored in the storage units 1630 and 1680 for each coding unit. At least one of the deblocking filtering, the SAO operation, and the ALF filtering may be performed on at least one of the coding units, the prediction units included in the coding units, and the transformation units.

The deblocking filtering is filtering for reducing blocking artifact of data units. The SAO operation is filtering for compensating for a pixel value modified by data encoding and decoding. The ALF filtering is filtering for minimizing a mean squared error (MSE) between a reconstructed image and an original image. Data filtered by the in-loop filters 1635 and 1685 may be transferred to the motion compensators 1640 and 1690 for each prediction unit. To encode the coding unit having a next sequence that is output from the block splitters 1618 and 1668 again, residual information between the current reconstructed image and the next coding unit that are output from the motion compensators 1618 and 1668 and the block splitters 1618 and 1668 may be generated.

The above-described encoding operation for each coding unit of the input images may be repeatedly performed in the same manner as described above.

The higher layer encoding end 1660 may refer to the reconstructed image stored in the storage unit 1630 of the lower layer encoding end 1610 for the inter-layer prediction. An encoding control unit 1615 of the lower layer encoding end 1610 may control the storage unit 1630 of the lower layer encoding end 1610 and transfer the reconstructed image of the lower layer encoding end 1610 to the higher layer encoding end 1660. The in-loop filter 1655 of the inter-layer prediction end 1650 may perform at least one filtering of the deblocking filtering, the SAO filtering, and the ALF filtering on a lower layer reconstructed image output from the storage unit 1630 of the lower layer encoding end 1610. In a case where a lower layer image and a higher layer image have different resolutions, the inter-layer prediction end 1650 may up-sample and transfer a lower layer reconstructed image to the higher layer encoding end 1660. In a case where inter-layer prediction is performed according to control of the switch 1698 of the higher layer encoding end 1660, inter-layer prediction of the higher layer image may be performed by referring to the lower layer reconstructed image transferred through the inter-layer prediction end 1650.

For image encoding, diverse coding modes may be set for the coding units, prediction units, and transformation units. For example, a depth or a split flag may be set as a coding mode for the coding units. A prediction mode, a partition type, an intra direction flag, a reference list flag may be set as a coding mode for the prediction units. The transformation depth or the split flag may be set as a coding mode of the transformation units.

The lower layer encoding end 1610 may determine a coding depth, a prediction mode, a partition type, an intra direction and reference list, and a transformation depth having the highest coding efficiency according to a result obtained by performing encoding by applying diverse depths for the coding units, diverse prediction modes for the prediction units, diverse partition types, diverse intra directions, diverse reference lists, and diverse transformation depths for the transformation units. However, the present invention is not limited to the above-described coding modes determined by the lower layer encoding end 1610.

The encoding control unit 1615 of the lower layer encoding end 1610 may control diverse coding modes to be appropriately applied to operations of elements. For scalable video encoding of the higher layer encoding end 1660, the encoding control unit 1615 may control the higher layer encoding end 1660 to determine a coding mode or residual information by referring to the encoding result of the lower layer encoding end 1610.

For example, the higher layer encoding end 1660 may use the coding mode of the lower layer encoding end 1610 as a coding mode of the higher layer image or may determine the coding mode of the higher layer image by referring to the coding mode of the lower layer encoding end 1610. The encoding control unit 1615 of the lower layer encoding end 1610 may control a control signal of the encoding control unit 1615 of the lower layer encoding end 1610 and, to determine a current coding mode of the higher layer encoding end 1660, may use the current coding mode based on the coding mode of the lower layer encoding end 1610.

Similarly to the scalable video encoding system 1600 according to the inter-layer prediction method of FIG. 16, a scalable video decoding system according to the inter-layer prediction method may be also implemented. That is, the scalable video decoding system may receive a lower layer bitstream and a higher layer bitstream. A lower layer decoding end of the scalable video decoding system may decode the lower layer bitstream to generate lower layer reconstructed images. A higher layer decoding end of the scalable video decoding system may decode the higher layer bitstream to generate higher layer reconstructed images.

FIG. 17 is a diagram for explaining an inter-layer prediction method, according to an embodiment of the present invention.

In a case where scalable video encoding for a higher layer image is performed, a coding mode of a lower layer image may be used to set whether to perform inter-layer prediction 1710 that encodes the higher layer image. If the inter-layer prediction 1710 is performed, inter-layer intra prediction 1720 or first inter-layer motion prediction 1730 may be performed. If the inter-layer prediction 1710 is not performed, second inter-layer motion prediction 1740 or prediction 1750 other than inter-layer motion prediction may be performed.

In a case where scalable video encoding for the higher layer image is performed, irrespective of whether the inter-layer prediction 1710 is performed, inter-layer residual prediction 1760 or general residual prediction 1770 may be performed.

For example, according to the inter-layer intra prediction 1720, sample values of the higher layer image may be predicted by referring to sample values of a lower layer image corresponding to the higher layer image. According to the first inter-layer motion prediction 1730, a partition type of a prediction unit by inter prediction of the lower layer image corresponding to the higher layer image, a reference index, and a motion vector may be applied as an inter mode of the higher layer image. The reference index indicates a sequence referred to by each image in reference images included in the reference list.

For example, according to the second inter-layer motion prediction 1740, the coding mode by inter prediction of the lower layer image may be referred to as a coding mode of the higher layer image. For example, although a reference index of the higher layer image may be determined by adopting the reference index of the lower layer image, a motion vector of the higher layer image may be predicted by referring to the motion vector of the lower layer image.

For example, according to the prediction 1750 other than the inter-layer motion prediction, irrespective of an encoding result of the lower layer image, motion prediction for the higher layer image may be performed by referring to other images of a higher layer image sequence.

In a case where scalable video encoding for the higher layer image is performed, irrespective of whether the inter-layer prediction 1710 is performed, the inter-layer residual prediction 1760 or the general residual prediction 1770 may be performed.

According to the inter-layer residual prediction 1760, residual information of the higher layer image may be predicted by referring to residual information of the lower layer image. According to the general residual prediction 1770, residual information of a current higher layer image may be predicted by referring to other images of the higher layer image sequence.

As described with reference to FIG. 17, for scalable video encoding of the higher layer image, inter-layer prediction between the lower layer image and the higher layer image may be performed. According to the inter-layer prediction, inter-layer mode prediction that determines the coding mode of the higher layer image by using the coding mode of the lower layer image, inter-layer residual prediction that determines the residual information of the higher layer image by using the residual information of the lower layer image, and inter-layer intra prediction that encodes the higher layer image with prediction by referring to the lower layer image only when the lower layer image is in an intra mode may be selectively performed.

For each coding unit or prediction unit according to an embodiment, it may be also determined whether to perform inter-layer mode prediction, inter-layer residual prediction, or inter-layer intra prediction.

As another example, if a reference list for each partition is determined, it may be determined whether to perform inter-layer motion prediction for each reference list.

For example, if a reference list for each partition that is an inter mode is determined, it may be determined whether to perform inter-layer motion prediction for each reference list.

For example, in a case where inter-layer mode prediction is performed on a current coding unit (prediction unit) of the higher layer image, a prediction mode of a coding unit (prediction unit) corresponding to the lower layer image may be determined as a prediction mode of the current coding unit (prediction unit) of the higher layer image.

For convenience of description, the current coding unit (prediction unit) of the higher/lower layer image may be referred to as a higher/lower layer data unit.

That is, when the lower layer data unit is encoded in an intra mode, inter-layer intra prediction may be performed for the higher layer data unit. If the lower layer data unit is encoded in the inter mode, inter-layer motion prediction may be performed for the higher layer data unit.

However, in a case where a lower layer data unit at a location corresponding to the higher layer data unit is encoded in the inter mode, it may be further determined whether to perform inter-layer residual prediction for the higher layer data unit. In a case where the lower layer data unit is encoded in the inter mode and inter-layer residual prediction is performed, residual information of the higher layer data unit may be predicted by using residual information of the lower layer data unit. Although the lower layer data unit is encoded in the inter mode, if inter-layer residual prediction is not performed, the residual information of the higher layer data unit may be determined by motion prediction between higher layer data units by not referring to the residual information of the lower layer data unit.

In a case where inter-layer mode prediction is not performed on the higher layer data unit, the inter-layer prediction method may be determined according to whether a prediction mode of the higher layer data unit is a skip mode, an inter mode, or an intra mode. For example, in a higher layer data unit of the inter mode, it may be determined whether inter-layer motion prediction is performed for each reference list of a partition. In a higher layer data unit of the intra mode, it may be determined whether inter-layer intra prediction is performed.

It may be selectively determined for each data unit whether inter-layer prediction is performed, inter-layer residual prediction is performed, or inter-layer intra prediction is performed. For example, the scalable video encoding apparatus 1400 may previously set whether to perform inter-layer prediction on data units of a current slice for each slice. The scalable video decoding apparatus 1500 may determine whether to perform inter-layer prediction on the data units of the current slice for each slice according to whether the scalable video encoding apparatus 1400 performs inter-layer prediction.

As another example, the scalable video encoding apparatus 1400 may previously set whether to perform inter-layer motion prediction on the data units of the current slice for each slice. The scalable video decoding apparatus 1500 may determine whether to perform inter-layer motion prediction (compensation) on the data units of the current slice for each slice according to whether the scalable video encoding apparatus 1400 performs inter-layer motion prediction.

As another example, the scalable video encoding apparatus 1400 may previously set whether to perform inter-layer residual prediction on the data units of the current slice for each slice. The scalable video decoding apparatus 1500 may determine whether to perform inter-layer residual prediction (reconstruction) on the data units of the current slice for each slice according to whether the scalable video encoding apparatus 1400 performs inter-layer residual prediction.

A detailed operation of each inter-layer prediction of the higher layer data unit will now be further described below.

The scalable video encoding apparatus 1400 may set whether to perform inter-layer mode prediction for each higher layer data unit. In a case where inter-layer mode prediction is performed for each higher layer data unit, only the residual information of the higher layer data unit may be transmitted and the coding mode may not be transmitted.

The scalable video decoding apparatus 1500 may determine whether to perform inter-layer mode prediction for each higher layer data unit according to whether the scalable video encoding apparatus 1400 performs inter-layer mode prediction for each higher layer data unit. Based on whether inter-layer mode prediction is performed, it may be determined whether to adopt the coding mode of the lower layer data unit as the coding mode of the higher layer data unit. In a case where inter-layer mode prediction is performed, the scalable video decoding apparatus 1500 may determine a coding unit of the higher layer data unit by using the coding mode of the lower layer data unit without receiving and reading the coding mode of the higher layer data unit. In this case, the scalable video decoding apparatus 1500 may receive and read only the residual information of the higher layer unit.

If the lower layer data unit corresponding to the higher layer data unit is encoded in the intra mode by performing inter-layer mode prediction, the scalable video decoding apparatus 1500 may perform inter-layer intra prediction on the higher layer data unit.

Deblocking filtering may be firstly performed on a reconstructed image of the lower layer data unit in the intra mode.

A part of the reconstructed image corresponding to the higher layer data unit on which deblocking filtering of the lower layer data unit is performed may be up-sampled. For example, a luma component of the higher layer data unit may be up-sampled through 4-tap sampling, and a chroma component thereof may be up-sampled through bilinear filtering.

Up-sampling filtering may be performed across a partition boundary of a prediction unit. However, if intra encoding is not performed on a neighboring data unit, the lower layer data unit may be up-sampled by extending a component of a boundary region of a current data unit to an outside of the boundary region and generating samples necessary for upsampling filtering.

If the lower layer data unit corresponding to the higher layer data unit is encoded in the inter mode by performing inter-layer mode prediction, the scalable video decoding apparatus 1500 may perform inter-layer motion prediction on the higher layer data unit.

First, a partition type, a reference index, and a motion vector of the lower layer data unit of the inter mode may be referred to. The corresponding lower layer data unit is up-sampled so that a partition type of the higher layer data unit may be determined. For example, if a size of a lower layer partition is MxN, a partition having a size of 2Mx2N on which the lower layer partition is up-sampled may be determined as a higher layer partition.

A reference index of a partition upsampled for the higher layer partition may be determined in the same manner as a reference index of the lower layer partition. A motion vector of the partition upsampled for the higher layer partition may be obtained by expanding a motion vector of the lower layer partition at the same ratio as an upsampling ratio.

The scalable video decoding apparatus 1500 may determine whether to perform inter-layer motion prediction on the higher layer data unit without performing inter-layer mode prediction if the higher layer data unit is determined to be the inter mode.

It may be determined whether inter-layer motion prediction is performed for each reference list of the higher layer partition. In a case where inter-layer motion prediction is performed, the scalable video decoding apparatus 1500 may determine the reference index and motion vector of the higher layer partition by referring to the corresponding reference index and motion vector of the lower layer partition.

In a case where the higher layer data unit is determined to be the intra mode without performing inter-layer mode prediction, the scalable video decoding apparatus 1500 may determine whether to perform inter-layer intra prediction for each partition of the higher layer data unit.

In a case where inter-layer intra prediction is performed, deblocking filtering is performed on the reconstructed image on which the lower layer data unit corresponding to the higher layer data unit is decoded, and upsampling is performed on the deblocking filtered reconstructed image. For example, a 4 tap sampling filter may be used for upsampling of the luma component, and a bilinear filter may be used for upsampling of the chroma component.

A prediction image of the higher layer data unit may be generated by predicting the higher layer data unit in the intra mode by referring to the reconstructed image upsampled from the lower layer data unit. A reconstructed image of the higher layer data unit may be generated by combining the prediction image of the higher layer data unit and a residual image of the higher layer data unit. Deblocking filtering may be performed on the generated reconstructed image.

Inter-layer prediction according to an embodiment may be restricted to be performed under a specific condition. For example, there may be restricted inter-layer intra prediction that uses the upsampled reconstructed image of the lower layer data unit only when the condition that the lower layer data unit is encoded in the intra mode is satisfied. However, in a case where the above restriction condition is not satisfied or in a case of multi-loop decoding, the scalable video decoding apparatus 1500 may completely perform inter-layer intra prediction according to whether the scalable video encoding apparatus 1400 performs inter-layer intra prediction.

The scalable video decoding apparatus 1500 may determine whether to perform inter-layer residual prediction on the higher layer data unit if the lower layer data unit at the location corresponding to the higher layer data unit is encoded in inter mode. Whether to perform inter-layer residual prediction may be determined irrespective of inter-layer mode prediction.

If the higher layer data unit is a skip mode, since inter-layer residual prediction may not be performed, it is unnecessary to determine whether to perform inter-layer residual prediction. If the scalable video decoding apparatus 1500 does not perform inter-layer residual prediction, higher layer images may be used to decode a current higher layer prediction unit to a general inter mode.

In a case where inter-layer residual prediction is performed, the scalable video decoding apparatus 1500 may upsample and refer to the residual information of the lower layer data unit for each data unit for the higher layer data unit. For example, residual information of the transformation unit may be upsampled through bilinear filtering.

The residual information upsampled from the lower layer data unit may be combined with a prediction image in which motion is compensated among the higher layer data units to generate a prediction image by inter-layer residual prediction. Thus, a residual image between an original image of the higher layer data unit and the prediction image generated by inter-layer residual prediction may be newly generated. To the contrary, the scalable video decoding apparatus 1500 may generate the reconstructed image by reading a residual image for inter-layer residual prediction of the higher layer data unit and combining the read residual image, the residual information upsampled from the lower layer data unit, and the prediction image in which motion is compensated among the higher layer data units.

As embodiments of inter-layer prediction, detailed operations of inter-layer mode prediction of the higher layer data unit, inter-layer residual prediction, and inter-layer intra prediction have been described above. However, the above-described embodiments of inter-layer prediction are applicable to the scalable video encoding apparatus 1400 and the scalable video decoding apparatus 1500, and the inter-layer prediction of the present invention is not limited thereto.

<Encoding Information that may be referred to in Inter-layer Prediction>

Diverse embodiments of encoding information that may be referred to between the lower layer image and the higher layer image through inter-layer prediction, in particular, diverse embodiments of encoding information for lower layer data units including coding units having a tree structure, and prediction units, partitions, and transformation units of the coding units will now be described below.

Encoding information of a higher layer maximum coding unit may be determined by referring to encoding information of a lower layer maximum coding unit.

In coding units having the tree structure, encoding information of a higher layer coding unit may be determined by referring to encoding information of a lower layer data unit.

In information on structure of coding units including split information or a split depth for coding units having the tree structure, information on structure of the higher layer coding unit may be determined by referring to information on structure of the lower layer coding unit. For example, information on structure of a current coding unit of the higher layer image may be determined by adopting the information on structure of the coding unit included in a maximum coding unit corresponding to the higher layer maximum coding unit among maximum coding units of the lower layer image. Thus, coding units having the tree structure included in the higher layer maximum coding unit may have a tree structure of the same type as that of coding units having the tree structure of the lower layer maximum coding unit.

As another example, the information on structure of the lower layer coding unit may be applied to a part of the tree structure of the higher layer coding units. For example, among coding units having the tree structure included in the higher layer maximum coding unit, the information on structure of the lower layer coding unit may be referred to so as to determine structures of coding units with respect to a left lower region of 4 rectangular regions split from the maximum coding unit. As another example, among coding units having the tree structure included in the higher layer maximum coding unit, structures of coding units having a small split number by including the maximum coding unit may be inferred from the information on structure of the lower layer coding unit.

In information on structure of transformation units including split information or a split depth for transformation units having the tree structure, information on structure of a higher layer transformation unit may be inferred from information on structure of a lower layer transformation unit. The information on structure of the lower layer transformation unit may be adopted in a part of a tree structure of higher layer transformation units. Specific embodiments are similar to embodiments related to the information on structure of coding units described above.

In a prediction mode indicating an inter mode, an intra mode, a skip mode, or merging information of a prediction unit or a partition, a prediction mode of a higher layer prediction unit (partition) may be inferred from a prediction mode of a lower layer prediction unit (partition).

In a partition type indicating a size of the prediction unit or the partition, e.g. 2Nx2N, 2NxN, Nx2N, NxN or a size of asymmetrically shaped partitions, a partition type of the higher layer prediction unit (partition) may be inferred from a partition type of the lower layer prediction unit (partition).

In residual information of transformation units, residual information of the higher layer transformation unit may be inferred by referring to residual information of the lower layer transformation unit. As another example, only a part of the residual information of the higher layer transformation unit may be inferred from the residual information of the lower layer transformation unit.

In transformation coefficient values of transformation units, a transformation coefficient value of the higher layer transformation unit may be inferred by referring to a transformation coefficient value of the lower layer transformation unit. Also, only a part of the transformation coefficient value of the higher layer transformation unit may be inferred from the transformation coefficient value of the lower layer transformation unit. For example, only a DC component of the transformation coefficient value of the higher layer transformation unit or only a predetermined number of transformation coefficient values of a low frequency component may be inferred from the transformation coefficient value of the lower layer transformation unit.

In locations of transformation coefficients of transformation units, locations of non-zero transformation coefficients of the higher layer transformation unit may be determined from locations of non-zero transformation coefficients of the lower layer transformation unit.

In reconstructed texture information, texture information of the higher layer data unit may be determined by referring to reconstructed texture information of the lower layer data unit.

A reconstructed predicted value of the lower layer data unit, for example, a predicted value determined by using a value of a spatially neighboring data unit of a current data unit in the intra mode, and a predicted value generated by performing motion compensation by using a firstly reconstructed reference frame in inter prediction, may be used as a predicted value of the higher layer data unit.

Inter prediction related information of the higher layer prediction unit may be determined by referring to inter prediction related information of a lower layer prediction unit of the inter mode. For example, inter prediction related information that may be referred to for inter-layer prediction may include a motion vector, a motion vector differential value mvd, a reference index, and an inter prediction direction (uni-direction/bi-directions). Also, motion competition scheme information such as a merging index and an advanced motion vector prediction (AMVP) index of prediction units may be referred to as the inter prediction related information.

Intra prediction related information of the higher layer prediction unit may be determined based on intra prediction related information of the lower layer prediction unit of the intra mode. For example, the intra prediction related information that may be referred to by inter-layer prediction may include a linear mode (LM) and a derivation mode (DM) as prediction modes between luma and chroma. The LM is a prediction mode in which prediction of a chroma component pixel is determined from a pixel of a neighboring data unit adjacent to a current data unit and a reconstructed luma chroma pixel of the current data unit. The DM is a prediction mode in which a prediction mode of the luma component is used as a prediction mode of the chroma component.

A loop filter parameter of the higher layer data unit may be determined by referring to a loop filter parameter for the higher layer data unit. For example, the loop filter parameter that may be referred to for inter-layer prediction may include SAO type parameters for an SAO method for adaptively setting an offset with respect to a sample, locations of bands having a band offset (BO) other than 0, an edge offset value, and a band offset value. The loop filter parameter that may be referred to by inter-layer prediction may include filter classification information for adaptive loop filtering (ALF), a filter coefficient, and a filtering on/off flag.

An encoding syntax for the higher layer image may be determined by using an encoding syntax determined by encoding the lower layer image.

Diverse embodiments of encoding information that may be referred to for inter-layer prediction are described above. However, encoding information that may be referred by the scalable video encoding apparatus 1400 according to an embodiment and the scalable video decoding apparatus 1500 according to an embodiment for inter-layer prediction are not limited to the above-described embodiments.

The scalable video encoding apparatus 1400 according to an embodiment and the scalable video decoding apparatus 1500 according to an embodiment may control inter-layer prediction separately for each sequence, slice, or picture. For example, first encoding information of the higher layer data unit is determined by referring to first encoding information of the lower layer data unit for inter-layer prediction in a first picture (or sequence or slice), whereas second encoding information of the higher layer data unit is determined by referring to second encoding information of the lower layer data unit for inter-layer prediction in a second picture (or sequence or slice).

The above listed encoding information of the lower layer data unit is not separately referred to, and encoding information of the higher layer data unit may be predicted by referring to a combination of two or more encoding information of the lower layer data unit.

<Inferred Inter-layer Prediction Method>

A prediction method of determining the encoding information of the higher layer data unit by referring to the combination of two or more encoding information of the lower layer data unit is referred to as inferred inter-layer prediction.

For example, in a case where a series of encoding information of the lower layer data unit is determined, the encoding information of the higher layer data unit may be determined by using the series of encoding information of the lower layer data unit. For example, first, third, and fifth encoding information of the higher layer data unit may be determined in the same manner as first encoding information, third encoding information, and fifth encoding information among an N number of encoding information of the lower layer data unit.

The scalable video encoding apparatus 1400 according to an embodiment and the scalable video decoding apparatus 1500 according to an embodiment may separately control inferred inter-layer prediction for each sequence, picture, and slice. Inferred inter-layer prediction may be separately controlled for each maximum coding unit, each coding unit, each prediction unit (partition), or each transformation unit in a single picture.

It may be determined whether to perform interfered inter-layer prediction separately for at least one data unit among the above-described sequence, picture, slice, maximum coding unit, coding unit, prediction unit (partition), and transformation unit. For example, inferred inter-layer prediction is performed in the first picture (or sequence or slice), whereas inferred inter-layer prediction may be performed in the second picture (or sequence or slice). Inferred inter-layer prediction is performed on data units included in a first maximum coding unit in a single picture, whereas inferred inter-layer prediction may not be allowed with respect to data units included in a second maximum coding unit in a single picture.

The interfered inter-layer prediction method may be determined separately for at least one data unit among the above-described sequence, picture, slice, maximum coding unit, coding unit, prediction unit (partition), and transformation unit. For example, first and fourth encoding information of the higher layer data unit are determined in the first picture (or sequence or slice) by using the first and fourth encoding information of the lower layer data unit through inferred inter-layer prediction, whereas first, second, fifth, and eighth encoding information of the higher layer data unit may be determined in the second picture (or sequence or slice) by using first, second, fifth, and eighth encoding information of the lower layer data unit through inferred inter-layer prediction.

As a specific example, according to an inferred mode among inferred inter-layer prediction, all encoding information of the higher layer data unit may be predicted from the lower layer data unit. Thus, the encoding information of the higher layer data unit may not be encoded. According to the inferred mode, an inferred mode parameter of the higher layer data unit may be encoded as a "true" value, and the encoding information thereof may not be encoded.

For example, according to inferred prediction among inferred inter-layer prediction, every coding mode of the higher layer data unit may be inferred from a coding mode of the lower layer data unit. Thus, a coding mode that may be inferred from the lower layer data unit may not be encoded among the encoding information of the higher layer data unit. However, according to inferred prediction, although the coding mode of the lower layer data unit is used as a coding mode of the higher layer data unit, a transformation coefficient or residual information among the encoding information of the higher layer data unit may be separately determined. An inferred prediction parameter of the higher layer data unit may be encoded as a "true" value, the transformation coefficient or residual information of the higher layer data unit may be encoded, and the coding mode that may be inferred from the lower layer data unit may not be encoded.

The scalable video decoding apparatus 1500 may not parse coding mode information and transformation coefficient (residual information) of the higher layer data unit based on the inferred mode parameter. The scalable video decoding apparatus 1500 may not parse the coding mode of the higher layer data unit based on the inferred prediction parameter.

However, the above-described inferred mode and inferred prediction are exemplary embodiments of the inferred inter-layer prediction method. Inferred inter-layer prediction is the inter-layer prediction method of determining the encoding information of the higher layer data unit by using the encoding information of the lower layer data unit with respect to a series of determined encoding information as described above.

The scalable video encoding apparatus 1400 may separately transmit a parameter indicating whether to perform inferred inter-layer prediction for each sequence, picture, or slice by using a SPS, a PPS (Picture Parameter Set), an APS (Adaptation Parameter Set), and a slice header. The parameter indicating whether to perform inferred inter-layer prediction may be transmitted as a coding mode for at least one data unit among maximum coding units, coding units, transformation units, and prediction units (partitions).

The scalable video decoding apparatus 1500 may separately parse the parameter indicating whether to perform inferred inter-layer prediction for each sequence, picture, or slice from the SPS, PPS, APS, or slice header. Similarly, information indicating whether to perform inferred inter-layer prediction according to an inferred mode or inferred prediction may be parsed as a coding mode with respect to at least one data unit of the maximum coding units, coding units, transformation units, and prediction units (partitions).

Although the coding mode information of the higher layer data unit is inferred from the coding mode information of the lower layer data unit through inter-layer prediction, refinement information for correcting the inferred information in detail may be encoded for the higher layer data unit. For example, although the scalable video decoding apparatus 1500 according to an embodiment may infer locations of coefficients of the higher layer data unit other than 0 from non-zero coefficient location information indicating the lower layer data unit, the scalable video decoding apparatus 1500 may readjust and predict a coefficient value of the higher layer data unit by using read refinement information.

For example, a parameter "abs_level_minus_1" for transformation coefficients may be read as refinement information of the transformation coefficients. For example, in a case where the parameter "abs_level_minus_1" is a true value, it means that a value obtained by subtracting 1 from an absolute value of an original value of a non-zero coefficient may be transmitted as non-zero coefficient information. Thus, a size of an inferred coefficient of the higher layer data unit may be exactly predicted by increasing received and parsed non-zero coefficient information by 1 again.

The refinement information is not limited to the parameter "abs_level_minus_1" and may include parameters for adjusting predicted values with respect to diverse information.

<Mapping Relationship between Higher/Lower Layer Data Units in Inter-layer Prediction>

The higher layer data unit and the lower layer data unit differ in terms of spatial resolution, temporal resolution, or image quality according to a scalable video encoding method, and thus the scalable video decoding apparatus 1400 according to an embodiment and the scalable video decoding apparatus 1500 may determine and refer to the lower layer data unit corresponding to the higher layer data unit for inter-layer prediction.

For example, according to scalable video encoding and decoding methods based on spatial scalability, a lower layer image and a higher layer image differ in terms of spatial resolution. In general, resolution of the lower layer image is smaller than that of the higher layer image. Thus, to determine a location of the lower layer data unit corresponding to the higher layer data unit, a resizing ratio of resolution may be considered. A resizing ratio between the higher and lower layer data units may be optionally determined. For example, a mapping location may be exactly determined as a sub pixel level such as 1/16 pixel size.

When locations of the higher and lower data units are presented as coordinates, mapping equations 1, 2, 3, and 4 for determining a coordinate of the lower layer data unit mapped to a coordinate of the higher layer data unit are as follows. In the mapping equations 1, 2, 3, and 4, a function Round() outputs a rounded value of an input value.

Mapping Equation 1

$$B_x = Round(\frac{E_x * D_x + R_x}{2^{(S-4)}})$$

Mapping Equation 2

$$B_y = Round(\frac{E_y * D_y + R_y}{2^{(S-4)}})$$

Mapping Equation 3

$$D_x = Round(\frac{2^S * BaseWidth}{ScaledBaseWidth})$$

Mapping Equation 4

$$D_y = Round(\frac{2^S * BaseHeight}{ScaledBaseHeight})$$

In the mapping equations 1 and 2, Bx and By denote x and y axis coordinate values of the lower layer data unit, respectively, and Ex and Ey denote x and y axis coordinate values of the higher layer data unit, respectively. Rx and Ry denote reference offsets in x and y axis directions to improve accuracy of each mapping. In the mapping equations 3 and 4, BaseWidth and BaseHeight denote a width and height of the lower layer data unit, respectively, and ScaledBaseWidth and ScaledBaseHeight denote a width and height of the upsampled lower layer data unit, respectively.

Thus, the x and y axis coordinate values of the lower layer data unit corresponding to the x and y axis coordinate values of the higher layer data unit may be determined by using the reference offsets for accurate mapping and the resizing ratio of resolution.

However, the above-described mapping equations 1, 2, 3, and 4 are exemplary specific embodiments for understanding the invention.

Mapping locations between the lower and higher layer data units may be determined in consideration of diverse factors in the present invention. For example, the mapping locations between the lower and higher layer data units may be determined in consideration of one or more factors such as a resolution ratio between lower and higher layer videos, an aspect ratio, a translation distance, an offset, etc.

The scalable video encoding apparatus 1400 according to an embodiment and the scalable video decoding apparatus 1500 according to an embodiment may perform inter-layer prediction based on coding units having a tree structure. According to coding units having the tree structure, the coding units are determined according to depths, and thus sizes of coding units are not the same. Thus, locations of lower layer coding units corresponding to higher layer coding units are separately determined.

Available diverse mapping relationships between data units of diverse levels of a higher layer image including maximum coding units, coding units, prediction units, transformation units, or partitions and data units of diverse levels of a lower layer image will now be described.

FIG. 18 is a diagram for explaining a mapping relationship between a lower layer and a higher layer, according to an embodiment of the present invention. In particular, FIG. 18 is a diagram for explaining a mapping relationship between a lower layer and a higher layer for inter-layer prediction based on coding units having a tree structure. A lower layer data unit determined to correspond to a higher layer data unit may be referred to as a reference layer data unit.

For inter-layer prediction according to an embodiment, a location of a lower layer maximum coding unit 1810 corresponding to a higher layer maximum coding unit 1820 may be determined. For example, the lower layer maximum coding unit 1810 including a left top sample 1880 may be determined to be a data unit corresponding to the higher layer maximum coding unit 1820 by searching for a data unit among lower layer data units to which a sample 1880 corresponding to the left top sample 1890 of the higher layer maximum coding unit 1820 belongs.

In a case where a structure of a higher layer coding unit may be inferred from a structure of a lower layer coding unit through inter-layer prediction according to an embodiment, a tree structure of coding units included in the higher layer maximum coding unit 1820 may be determined in the same manner as a tree structure of coding units included in the lower layer maximum coding unit 1810.

Similarly to coding units, sizes of partitions (prediction units) or transformation units included in coding units having the tree structure may be variable according to a size of a corresponding coding unit. Even sizes of partitions or transformation units included in coding units having the same size may be varied according to partition types or transformation depths. Thus, in partitions or transformation units based on coding units having the tree structure, locations of lower layer partitions or lower layer transformation units corresponding to higher layer partitions or higher layer transformation units are separately determined.

In FIG. 18, a location of a predetermined data unit 1880 of the lower layer maximum coding unit 1810 corresponding to the left top sample 1890 of the higher layer maximum coding unit 1820 is searched for to determine a reference layer maximum coding unit for inter-layer prediction. Similarly, a reference layer data unit may be determined by comparing a location of a lower layer data unit corresponding to a left top sample of a higher layer data unit, by comparing locations of centers of the lower layer and higher layer data units, or by comparing predetermined locations of the lower layer and higher layer data units.

Although a case where maximum coding units of another layer for inter-layer prediction are mapped is exemplified in FIG. 18, data units of another layer may be mapped with respect to various types of data units including maximum coding units, coding units, prediction units, partitions, transformation units, and minimum units.

Therefore, the lower layer data unit may be upsampled by a resizing ratio or an aspect ratio of spatial resolution to determine a lower layer data unit corresponding to a higher layer data unit for inter-layer prediction according to an embodiment. An upsampled location may be moved by a reference offset so that a location of the reference layer data unit may be accurately determined. Information regarding the reference offset may be explicitly transmitted and received between the scalable video encoding apparatus 1400 and the scalable video decoding apparatus 1500. However, although the information regarding the reference offset is not transmitted and received, the reference offset may be predicted based on peripheral motion information, disparity information of the higher layer data unit, or a geometric shape of the higher layer data unit.

Encoding information regarding a location of the lower layer data unit corresponding to a location of the higher layer data unit may be used to predict inter-layer prediction of the higher layer data unit. Encoding information that may be referred to may include at least one of coding modes, predicted values, reconstructed values, information on structure of data units, and syntax.

For example, a structure of the higher layer data unit may be inferred from a corresponding structure (a structure of maximum coding units, a structure of coding units, a structure of prediction units, a structure of partitions, a structure of transformation units, etc.) of the lower layer data unit.

Inter-layer prediction between a group of two or more data units of the lower layer image and the corresponding group of data units of the higher layer image may be performed as well as performing a comparison between single data units of the lower layer and higher layer images. A group of lower layer data units including a location corresponding to a group of higher layer data units may be determined.

For example, among lower layer data units, a lower layer data unit group including a data unit corresponding to a data unit of a predetermined location among higher layer data unit groups may be determined as a reference layer data unit group.

Data unit group information may represent a structure condition for constituting groups of data units. For example, coding unit group information for higher layer coding units may be inferred from coding unit group information for constituting a group of coding units in a lower layer image. For example, the coding unit group information may include a condition that coding units having depths lower than or identical to a predetermined depth constitute a coding unit group, a condition that coding units less than a predetermined number constitute a coding unit group, etc.

The data unit group information may be explicitly encoded and transmitted and received between the scalable video encoding apparatus 1400 and the scalable video decoding apparatus 1500. As another example, although the data unit group information is not transmitted and received, group information of the higher layer data unit between the scalable video encoding apparatus 1400 and the scalable video decoding apparatus 1500 may be predicted from group information of the lower layer data unit.

Similarly to the coding unit group information, group information of a higher layer maximum coding unit (transformation unit) may be inferred from group information of a lower layer maximum coding unit (transformation unit) through inter-layer prediction.

Inter-layer prediction is possible between higher and lower layer slices. Encoding information of the higher layer slice including the higher layer data unit may be inferred by referring to encoding information of the lower layer slice including the lower layer data unit including a location corresponding to the higher layer data unit. Encoding information regarding slices may include all encoding information of data units included in slices as well as information regarding slice structures such as slice shapes.

Inter-layer prediction is possible between higher and lower layer tiles. Encoding information of the higher layer tile including the higher layer data unit may be inferred by referring to encoding information of the lower layer tile including the lower layer data unit including the location corresponding to the higher layer data unit. Encoding information regarding tiles may include all encoding information of data units included in tiles as well as information regarding tile structures such as tile shapes.

The higher layer data unit may refer to lower layer data units having the same type as described above. The higher layer data unit may also refer to lower layer data units having different types as described above.

Diverse encoding information of the lower layer data unit that may be used by the higher layer data unit is described in <Encoding Information that may be referred to in Inter-layer Prediction> above. However, the encoding information that may be referred to in inter-layer prediction according to the technical concept of the present invention is not limited to and construed as the above-described encoding information, and may be construed as various types of data that may occur as a result of encoding the higher layer image and the lower layer image.

A single piece of encoding information is not referred to between the higher and lower layer data units for inter-layer prediction and a combination of at least one piece of encoding information may be referred to. At least one piece of encoding information that may be referred to may be combined in various ways and thus, a reference encoding information set may be set in various ways.

Likewise, diverse mapping relationships between the higher layer data unit and the lower layer data unit are described in <Mapping Relationships between Higher and Lower Layer Data Units in Inter-layer Prediction> above. However, the mapping relationship between the higher layer data unit and the lower layer data unit in inter-layer prediction according to the technical concept of the present invention is not limited to or construed as the above-described mapping relationships, but may be construed as various types of mapping relationships between a higher layer data unit (group) and a lower layer data unit (group) that may be related to each other.

Moreover, a combination of the reference encoding information set that may be referred to between the higher and lower layer data units for inter-layer prediction and the mapping relationship therebetween may also be set in various ways. For example, the reference encoding information set for inter-layer prediction may be set in various ways such as $\alpha$, $\beta$, $\gamma$, $\delta$, ..., and the mapping relationship between the higher and lower layer data units may be set in various ways such as □, □, □, □.... In this case, the combination of the reference encoding information set and the mapping relationship may be set as at least one of "encoding information set $\alpha$ and mapping relationship □", "$\alpha$ and □", "$\alpha$ and □", "$\alpha$ and □", ..., " encoding information set $\beta$ and mapping relationship □", "$\beta$ and □", "$\beta$ and □", "$\beta$ and □", ..., " encoding information set $\gamma$ and mapping relationship □", "$\gamma$ and □", "$\gamma$ and □", "$\gamma$ and □", ..., " encoding information set $\delta$ and mapping relationship □", and "□ and "$\delta$ and □", .... Two or more reference encoding information sets may be set to be combined with a single mapping relationship or two or more mapping relationships may be set to be combined with a single reference encoding information set.

Embodiments of mapping data units of different levels in inter-layer prediction between higher and lower layer images will now be described.

For example, higher layer coding units may refer to encoding information regarding a group of lower layer maximum coding units including corresponding locations. To the contrary, higher layer maximum coding units may refer to encoding information regarding the group of lower layer coding units including corresponding locations.

For example, encoding information of higher layer coding units may be determined by referring to the encoding information regarding the lower layer maximum coding unit group including corresponding locations. That is, lower layer maximum coding units that may be referred to may include all respective locations corresponding to all locations of higher layer coding units.

Similarly, encoding information of higher layer maximum coding units may be determined by referring to encoding information regarding the lower layer coding unit group including corresponding locations. That is, lower layer coding units that may be referred to may include all respective locations corresponding to all locations of higher layer maximum coding units.

According to an embodiment, it may be determined whether to perform inferred inter-layer prediction separately for each sequence, each picture, each slice or each maximum coding unit as described above.

Although inter-layer prediction is performed on a predetermined data unit, inferred inter-layer prediction may be partially controlled within the predetermined data unit. For example, in a case where it is determined whether to perform inter-layer prediction of a maximum coding unit level, although inter-layer prediction is performed on a current maximum coding unit of the higher layer image, inferred inter-layer prediction is performed only on data units of a partial level among data units of low levels included in the current maximum coding unit by using corresponding lower layer data units, and inferred inter-layer prediction is not performed on other data units having no corresponding lower layer data units. The data units of low levels in the current maximum coding unit may include coding units, prediction units, transformation units, and partitions in the current maximum coding unit, and the data units of a partial level may be at least one of coding units, prediction units, transformation units, and partitions. Thus, data units of the partial level included in higher layer maximum coding units may be inferred from lower layer data units, whereas encoding information regarding data units of the other levels in the higher layer maximum coding units may be encoded and transmitted and received.

For example, in a case where inter-layer prediction is performed only on higher layer maximum coding units, higher layer coding units having corresponding lower layer coding units among coding units of higher layer maximum coding units may be predicted by referring to a reconstructed image generated by performing intra prediction of lower layer coding units. However, single layer prediction using the higher layer image, other than inter-layer prediction, may be performed on higher layer coding units having no corresponding intra predicted lower layer coding units.

Inferred inter-layer prediction for higher layer data units may be also possible only when a predetermined condition regarding lower layer data units is satisfied. The scalable video encoding apparatus 1400 may transmit information indicating whether inferred inter-layer prediction is actually performed in a case where the predetermined condition is satisfied and inferred inter-layer prediction is possible. The scalable video decoding apparatus 1500 may parse information indicating whether inferred inter-layer prediction is possible, read the parsed information, determine which the predetermined condition is satisfied and inferred inter-layer prediction has been performed, and determine coding modes of higher layer data units by referring to a combination of a series of coding modes of lower layer data units when the predetermined condition is satisfied.

For example, residual prediction between prediction units of different layers may be performed only when sizes of higher layer prediction units are greater than or equal to sizes of lower layer prediction units. For example, inter-layer prediction between maximum coding units of different layers may be performed only when sizes of higher layer maximum prediction units are greater than or equal to sizes of lower layer maximum prediction units. This is because lower layer maximum coding units or lower layer prediction units are upsampled according to a resolution resizing ratio or aspect ratio.

As another example, an inferred inter-layer prediction mode may be possible under a condition of a predetermined slice type such as slices I-, B-, and P- of higher layer data units.

Prediction according to an inter-layer intra skip mode is an example of inferred inter-layer prediction. According to the inter-layer intra skip mode, residual information of an intra mode for higher layer data units does not exist, and thus a lower layer intra reconstructed image corresponding to higher layer data units may be used as an intra reconstructed image of higher layer data units.

Thus, as a specific example, it may be determined whether to encode (decode) information indicating the inter-layer intra skip mode according to whether slice types of higher layer data units are slice types of the inter mode such as slices B- and P- or slice types of the intra mode such as a slice I-.

Encoding information of lower layer data units may be used in a corrected format or a downgraded format for inter-layer prediction.

For example, motion vectors of lower layer partitions may be reduced to an accuracy of a specific pixel level like an integer pixel level and a sub-pixel level of a 1/2 pixel level, and may be used as motion vectors of higher layer partitions.

As another example, motion vectors of a plurality of lower layer partitions may be merged into one motion vector and referred to by higher layer partitions.

For example, a region in which motion vectors are combined may be determined as a fixed region. Motion vectors may be combined only in partitions included in a region having a fixed size or data units of fixed neighboring locations.

As another example, although two or more lower layer data units correspond to higher layer data units of predetermined sizes, motion vectors of higher layer data units may be determined by using only motion information of a single data unit among lower layer data units. For example, a motion vector of a lower layer data unit of a predetermined location among a plurality of lower layer data units corresponding to 16X16 higher layer data units may be used as a motion vector of a higher layer data unit.

In another case, control information for determining the region in which motion vectors are combined may be inserted into a SPS, a PPS, an APS, or a slice header and transmitted. Thus, the control information for determining the region in which motion vectors are combined may be parsed for each sequence, each picture, each adaptation parameter, or each slice. Motion information of lower layer partitions may be modified and stored for example. Originally, the motion information of lower layer partitions is stored as a combination of a reference index and motion vector. However, the motion information of lower layer partitions according to an embodiment may be stored after a size thereof is adjusted or modified to a motion vector corresponding to a reference index that is assumed to be 0. Accordingly, storage of the motion information of lower layer partitions may be reduced. For inter-layer prediction of higher layer partitions, the stored motion information of lower layer partitions may be modified again according to a reference image corresponding to a reference index of higher layer partitions. That is, motion vectors of higher layer partitions may be determined by referring to the modified motion information of lower layer partitions according to the reference image of higher layer partitions.

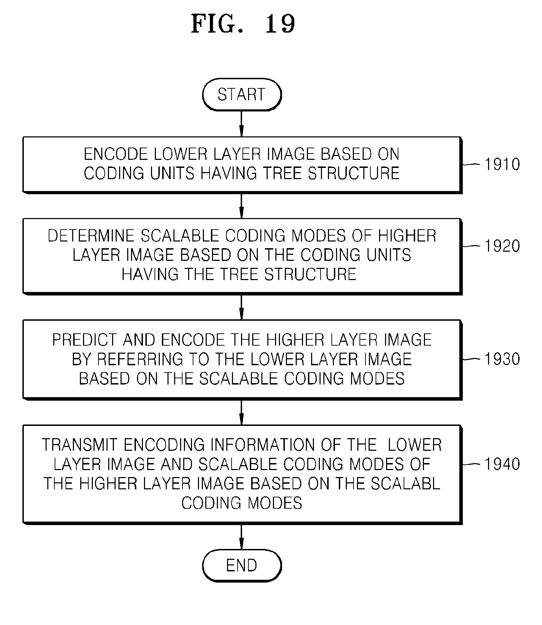

FIG. 19 is a flowchart of a scalable video encoding method, according to an embodiment of the present invention.

In operation 1910, a lower layer image is encoded based on coding units having a tree structure. In operation 1920, a higher layer image is encoded based on the coding units having the tree structure, and scalable coding modes are determined to perform scalable encoding by referring to the lower layer image.

In operation 1930, the higher layer image is predicted and encoded by referring to encoding information of the lower layer image based on the scalable coding modes determined in operation 1920.

According to an embodiment, the higher layer image may be encoded by referring to at least one of encoding information of the coding units and encoding information of transformation units included in the coding units among coding modes of the lower layer image.

According to an embodiment, coding modes of the higher layer image may be determined by referring to at least one of information on structure, prediction mode information, partition type information, motion information, intra information, loop filtering related information, non-zero coefficient location information, and reconstructed texture information among the coding modes of the lower layer image.

According to an embodiment, predicted values of the higher layer image may be determined by referring to at least one of residual information, coefficient information, and reconstructed predicted values among the coding modes of the lower layer image.

In operation 1940, the coding modes and predicted values of the lower layer image and the scalable coding mode of the higher layer image are output based on scalable coding modes.

According to a first scalable coding mode, the coding information excluding information inferred from the coding information of the lower layer image may be further output. According to a second scalable coding mode, the scalable coding modes of the higher layer image may be output.

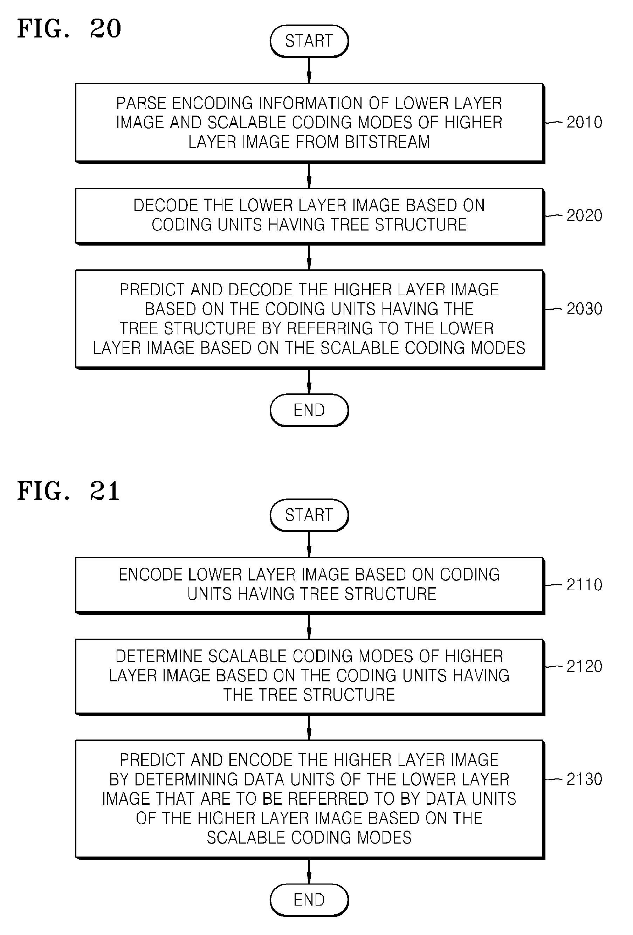

FIG. 20 is a flowchart of a scalable video decoding method, according to an embodiment of the present invention.

In operation 2010, coding modes and predicted values of a lower layer image and scalable coding modes of a higher layer image are parsed from a received bitstream. For example, according to a first scalable coding mode, information excluding information inferred from coding information of the lower layer image may be parsed from the bitstream. According to a second scalable coding mode, information regarding the scalable coding modes of the higher layer image may be parsed from the bitstream.

In operation 2020, the lower layer image is decoded based on coding units having a tree structure by using the parsed coding modes and predicted values of the lower layer image.

In operation 2030, the higher layer image is decoded based on the coding units having the tree structure, and the higher layer image is predicted and decoded by referring to encoding information of the lower layer image according to the scalable coding modes of the higher layer image.

According to an embodiment, coding modes of the higher layer image may be determined by referring to the encoding information of the lower layer image. According to an embodiment, the coding modes of the higher layer image may be determined by referring to at least one of information on structure, prediction mode information, partition type information, motion information, intra information, loop filtering related information, non-zero coefficient location information, and reconstructed texture information among coding modes of the lower layer image. According to an embodiment, predicted values of the higher layer image may be determined by referring to at least one of residual information, coefficient information, and reconstructed predicted values among the coding modes of the lower layer image. The higher layer image may be decoded based on the above-determined and inferred coding information of the higher layer image.

FIG. 21 is a flowchart of a scalable video encoding method, according to another embodiment of the present invention.

In operation 2110, a lower layer image is encoded based on coding units having a tree structure. In operation 2120, a higher layer image is encoded based on the coding units having the tree structure, and scalable coding modes are determined to perform scalable encoding by referring to the lower layer image.

In operation 2130, data units of the lower layer image that are to be referred to by data units of the higher layer image are determined based on the scalable coding modes determined in operation 2120. The data units based on the coding units having the tree structure may include at least one of maximum coding units, coding units, prediction units included in the coding units, transformation units, and minimum units. The higher layer image is predicted and encoded by referring to coding information of the above-determined data units of the lower layer image.

According to an embodiment, a data unit of the lower layer image having the same type as a current data unit of the higher layer image may be determined, and the current data unit of the higher layer image may be encoded by referring to encoding information of data units of the lower layer image.

According to an embodiment, a data unit group of the lower layer image having the same type as a current data unit group of the higher layer image may be determined, and the current data unit group of the higher layer image may be encoded by referring to encoding information of data unit groups of the lower layer image.

According to an embodiment, a data unit of the lower layer image having a different type from that of the current data unit of the higher layer image may be referred to. A data unit group of the lower layer image having a different type from that of the current data unit group of the higher layer image may be referred to.

In a case where an inter-layer prediction mode for the current data unit of the higher layer image is determined, some of lower data units included in the current data unit may be encoded by referring to the lower layer image, and the other lower data units may be encoded by single layer prediction in the higher layer.

The encoding information inferred from the lower layer image may be changed and encoding information of the higher layer image may be determined by referring to the changed encoding information.

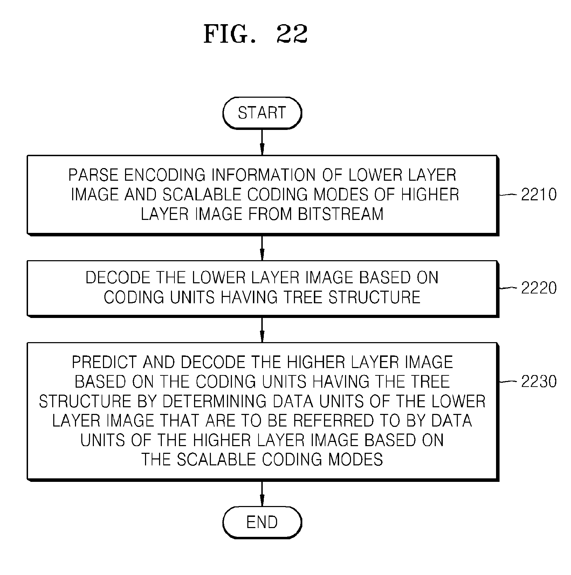

FIG. 22 is a flowchart of a scalable video decoding method, according to another embodiment of the present invention.

In operation 2210, a lower layer image is decoded based on coding units having a tree structure by using coding modes and predicted values of the lower layer image that are parsed from a received bitstream.

In operation 2220, data units of the lower layer image that may be referred to by data units of a higher layer image may be determined according to scalable coding modes of the higher layer image. Coding units having the tree structure of the higher layer image may be predicted and decoded by referring to encoding information of the corresponding data units of the lower layer image.

According to an embodiment, encoding information of a current data unit of the higher layer image may be determined by referring to encoding information of a data unit of the lower layer image corresponding to the current data unit of the higher layer image.

According to an embodiment, encoding information of a current data unit group of the higher layer image may be determined by referring to encoding information of a data unit group of the lower layer image corresponding to the current data unit group of the higher layer image.

According to an embodiment, a data unit of the lower layer image having a different type from that of the current data unit of the higher layer image may be referred to. According to an embodiment, a data unit group of the lower layer image having a different type from that of the current data unit group of the higher layer image may be referred to.

According to an embodiment, in a case where an inter-layer prediction mode for the current data unit of the higher layer image is determined, some of lower data units included in the current data unit may be decoded by referring to the lower layer image, and the other lower data units may be encoded by single layer prediction in the a higher layer.

Image data in a spatial domain is reconstructed as the at least one maximum coding unit is decoded according to the coding units, and thus a picture and a video that is a picture sequence may be reconstructed. The reconstructed video may be reproduced by a reproducing apparatus, stored in a storage medium, or transmitted via a network.

The scalable video encoding methods described with reference to FIGS. 19 and 21 corresponds to operations of the scalable video encoding apparatus 1400. The scalable video encoding apparatus 1400 may include a memory in which a program for implementing the scalable video encoding methods described with reference to FIGS. 19 and 21 is recorded by using a computer and the scalable video encoding apparatus 1400 calls and executes the program from the memory, and thus the operations of the scalable video encoding apparatus 1400 described with reference to FIG. 14 may be implemented. Alternatively, the scalable video encoding apparatus 1400 reads and executes the program from a recording medium in which the program for implementing the scalable video encoding methods is recorded, and thus the operations of the scalable video encoding apparatus 1400 described with reference to FIG. 14 may be implemented.

The scalable video decoding methods described with reference to FIGS. 20 and 22 correspond to operations of the scalable video decoding apparatus 1500. The scalable video decoding apparatus 1500 may include a memory in which a program for implementing the scalable video decoding methods described with reference to FIGS. 20 and 22 is recorded by using a computer and the scalable video decoding apparatus 1500 calls and executes the program from the memory, and thus the operations of the scalable video decoding apparatus 1500 described with reference to FIG. 15 may be implemented. Alternatively, the scalable video decoding apparatus 1500 reads and executes the program from a recording medium in which the program for implementing the scalable video decoding methods is recorded, and thus the operations of the scalable video decoding apparatus 1500 described with reference to FIG. 15 may be implemented.

The embodiments of the present invention can be written as computer programs and can be implemented in general-use digital computers that execute the programs using a computer readable recording medium. Examples of the computer readable recording medium include magnetic storage media (e.g., ROM, floppy disks, hard disks, etc.) and optical recording media (e.g., CD-ROMs, or DVDs).

While this invention has been particularly shown and described with reference to preferred embodiments thereof, it will be understood by those of ordinary skill in the art that various changes in form and details may be made therein without departing from the spirit and scope of the invention as defined by the appended claims. The preferred embodiments should be considered in descriptive sense only and not for purposes of limitation. Therefore, the scope of the invention is defined not by the detailed description of the invention but by the appended claims, and all differences within the scope will be construed as being included in the present invention.

**Claims**

1.  A scalable video encoding method comprising:

    encoding a lower layer image based on coding units having a tree structure including completely split coding units among hierarchically split coding units of maximum coding units of an image;
    determining scalable coding modes for performing scalable encoding on a higher layer image based on the coding units having the tree structure by referring to the lower layer image;
    predicting and encoding the higher layer image by referring to encoding information of the lower layer image based on the determined scalable coding modes; and
    outputting coding modes and predicted values of the lower layer image and the determined scalable coding modes of the higher layer image based on the determined scalable coding modes,
    wherein, among spatially split maximum coding units of the image of a video, each maximum coding unit is split into a plurality of coding units, and each coding unit is determined, individually from adjacent coding units, to split into smaller coding units.

2.  The scalable video encoding method of claim 1, wherein the predicting and encoding of the higher layer image comprises:

    determining encoding information of the higher layer image by referring to at least one of information on structure of coding units, information on structure of transformation units included in the coding units, prediction modes, partition types, motion information, and intra information among the encoding information of the lower layer image; and
    encoding the higher layer image based on the determined encoding information of the higher layer image.

3.  The scalable video encoding method of claim 1, wherein the predicting and encoding of the higher layer image comprises:

    determining encoding information of the higher layer image by referring to residual information of the lower layer image, transformation coefficients, predicted values, reconstructed values, syntax elements, loop filtering related information, non-zero coefficient location information, reconstructed predicted values, and reconstructed texture information; and
    encoding the higher layer image based on the determined encoding information of the higher layer image.

4.  The scalable video encoding method of claim 1, wherein the predicting and encoding of the higher layer image comprises:

    determining data units of the lower layer image that are to be referred to by data units of the higher layer image based on the determined scalable coding modes; and
    predicting and encoding the higher layer image by referring to encoding information of the determined data units of the lower layer image,
    wherein the data units comprise at least one of the maximum coding units, the coding units, and prediction units, transformation units, and minimum units included in the coding units.

5.  The scalable video encoding method of claim 4, wherein the predicting and encoding of the higher layer image comprises:

    encoding a current data unit of the higher layer image by referring to at least one of encoding information of a data unit of the lower layer image having a same type of the data unit and corresponding to the current data unit of the higher layer image, encoding information of a data unit of the lower layer image having a different type of the data unit, slice information, and tile information of data units of the lower layer image.

6. The scalable video encoding method of claim 4, wherein the predicting and encoding of the higher layer image comprises:

determining at least one of a data unit group of the lower layer image having a same type of the data unit group and corresponding to a current data unit group of the higher layer image and a data unit group of the lower layer image having a different type of the data unit group; and
encoding the current data unit group of the higher layer image by referring to encoding information of the determined data unit group of the lower layer image.

7. A scalable video decoding method comprising:

parsing encoding information of a lower layer image and scalable coding modes of a higher layer image from a received bitstream;
decoding the lower layer image by using the parsed encoding information of the lower layer image based on coding units having a tree structure including completely split coding units among hierarchically split coding units of maximum coding units; and
predicting and decoding the higher layer image based on the coding units having the tree structure by referring to the encoding information of the lower layer image according to the determined scalable coding modes,
wherein, among spatially split maximum coding units of an image of a video, each maximum coding unit is split into a plurality of coding units, and each coding unit is determined, individually from adjacent coding units, to split into smaller coding units.

8. The scalable video decoding method of claim 7, wherein the predicting and decoding of the higher layer image comprises:

determining encoding information of the higher layer image by referring to at least one of information on structure of coding units, information on structure of transformation units included in the coding units, prediction modes, partition types, motion information, and intra information among the encoding information of the lower layer image; and
decoding the higher layer image based on the determined encoding information of the higher layer image.

9. The scalable video decoding method of claim 7, wherein the predicting and decoding of the higher layer image comprises:

determining encoding information of the higher layer image by referring to residual information, transformation coefficients, predicted values, reconstructed values, syntax elements, loop filtering related information, non-zero coefficient location information, reconstructed predicted values, and reconstructed texture information among the encoding information of the lower layer image; and
decoding the higher layer image based on the determined encoding information of the higher layer image.

10. The scalable video decoding method of claim 7, wherein the predicting and decoding of the higher layer image comprises:

determining data units of the lower layer image that are to be referred to by data units of the higher layer image according to the determined scalable coding modes of the higher layer image parsed from the bitstream, and
predicting and decoding the higher layer image based on the coding units having the tree structure by referring to encoding information of the determined data units of the lower layer image,
wherein the data units comprise at least one of the maximum coding units, the coding units, and prediction units, transformation units, and minimum units included in the coding units.

11. The scalable video decoding method of claim 10, wherein the predicting and decoding of the higher layer image comprises:

determining at least one of encoding information of a data unit of the lower layer image having a same type of the data unit and corresponding to the current data unit of the higher layer image, encoding information of a data unit of the lower layer image having a different type of the data unit, slice information, and tile information of data units of the lower layer image;

determining encoding information of a current data unit of the higher layer image by referring to the determined encoding information of the data unit of the lower layer image; and

decoding the current data unit by using the determined encoding information of the current data unit.

12. The scalable video decoding method of claim 10, wherein the predicting and decoding of the higher layer image comprises:

determining at least one of a data unit group of the lower layer image having a same type of the data unit group and corresponding to a current data unit group of the higher layer image and a data unit group of the lower layer image having a different type of the data unit group;

determining encoding information of the current data unit group of the higher layer image by referring to encoding information of the determined data unit group of the lower layer image; and

decoding the current data unit group by using the determined encoding information of the current data unit group.

13. A scalable video encoding apparatus comprising:

a lower layer encoder which encodes a lower layer image based on coding units having a tree structure including completely split coding units among hierarchically split coding units of maximum coding units of an image;

a higher layer encoder which determines scalable coding modes for performing scalable encoding on a higher layer image based on the coding units having the tree structure by referring to the lower layer image, and predicts and encodes the higher layer image by referring to encoding information of the lower layer image based on the determined scalable coding modes; and

an output unit which outputs coding modes and predicted values of the lower layer image and the determined scalable coding modes of the higher layer image based on the determined scalable coding modes,

wherein, among spatially split maximum coding units of the image of a video, each maximum coding unit is split into a plurality of coding units, and each coding unit is determined, individually from adjacent coding units, to split into smaller coding units.

14. A scalable video encoding apparatus comprising:

a parsing unit which parses encoding information of a lower layer image and scalable coding modes of a higher layer image from a received bitstream;

a lower layer decoder which decodes the lower layer image by using the parsed encoding information of the lower layer image based on coding units having a tree structure including completely split coding units among hierarchically split coding units of maximum coding units; and

a high layer decoder which predicts and decodes the higher layer image based on the coding units having the tree structure by referring to the encoding information of the lower layer image according to the determined scalable coding modes,

wherein, among spatially split maximum coding units of an image of a video, each maximum coding unit is split into a plurality of coding units, and each coding unit is determined, individually from adjacent coding units, to split into smaller coding units.

15. A computer-readable recording medium having recorded thereon a program for executing the method of claim 1 or 7.

FIG. 1

100

110
LCU SPLITTER

120
CODING UNIT DETERMINER

130
OUTPUTTER

FIG. 2

200

210
RECEIVER

220
IMAGE DATA AND ENCODING INFORMATION EXTRACTOR

230
IMAGE DATA DECODER

# FIG. 3

64
64
64×64

64
32
64×32

32
64
32×64

32
32
32×32

32
32
32×32

32
16
32×16

16
32
16×32

16
16
16×16

16
16
16×16

16
8
16×8

8
16
8×16

8
8
8×8

8
8
8×8

8
4
8×4

4
8
4×8

4
4
4×4

315

RESOLUTION:1920×1080
MAXIMUM SIZE OF CODING UNIT:64
MAXIMUM DEPTH=2

— 310

RESOLUTION:1920×1080
MAXIMUM SIZE OF CODING UNIT:64
MAXIMUM DEPTH=3

— 320

RESOLUTION:352×288
MAXIMUM SIZE OF CODING UNIT:16
MAXIMUM DEPTH=1

— 330

335  325

## FIG. 4

# FIG. 5

BITSTREAM — PARSER (510) → ENTROPY DECODER (520) → INVERSE QUANTIZER (530) → INVERSE TRANSFORMER (540)

505

500

RECONSTRUCTED FRAME (595) ← SAO ADJUSTER (580) ← DEBLOCKING FILTER (570) ← INTRA PREDICTOR (550) ← INTRA

REFERENCE FRAME (585)

MOTION COMPENSATOR (560) ← INTER

EP 2 830 312 A1

# FIG. 6

MAXIMUM HEIGHT
AND MAXIMUM
WIDTH OF
CODING UNIT=64    MAXIMUM DEPTH =3

LCU

600

| 64 /610 | 64 /612 | 32 /614 | 32 /616 |
|---|---|---|---|
| 64 64×64 | 32 64×32 | 64 32×64 | 32 32×32 |

PREDICTION
UNIT/
PARTITION

| 32 /620 | 32 /622 | 16 /624 | 16 /626 |
|---|---|---|---|
| 32 32×32 | 16 32×16 | 32 16×32 | 16 16×16 |

| 16 /630 | 16 /632 | 8 /634 | 8 /636 |
|---|---|---|---|
| 16 16×16 | 8 16×8 | 16 8×16 | 8 8×8 |

SCU

| 8 /640 | 8 /642 | 4 /644 | 4 /646 |
|---|---|---|---|
| 8 8×8 | 4 8×4 | 8 4×8 | 4 4×4 |

DEEPER CODING UNIT

# FIG. 7

CODING UNIT (710)

TRANSFORMATION UNIT (720)

64

64×64

32

32

32×32

# FIG. 8

PARTITION TYPE (800)

2N    802

2N    2N    CU_0

64×64

2N    804

N

2N    0
   1

N    806

2N    0    1

N    808

N    0    1
   2    3

PREDICTION MODE (810)

812

INTRA MODE

814

INTER MODE

816

SKIP MODE

SIZE OF TRANSFORMATION UNIT (820)

822    824

INTRA

826    828

INTER

# FIG. 9

DEPTH=0

2N_0

2N_0 | CU_0
900

910 | SPLIT (920)

2N_0 | 2N_0 | N_0 | N_0
2N_0 | | N_0 | 0 | 2N_0 | 0 | 1 | N_0 | 0 | 1
| | | 1 | | | | | 2 | 3
912 | 914 | 916 | 918

0 | 1
2 | 3
930

DEPTH =1

2N_1

2N_1 | CU_1
930

940 | SPLIT (950)

2N_1 | 2N_1 | N_1 | N_1
2N_1 | | N_1 | 0 | 2N_1 | 0 | 1 | N_1 | 0 | 1
| | | 1 | | | | | 2 | 3
942 | 944 | 946 | 948

0 | 1
2 | 3
960

SPLIT (970)

DEPTH =d-1

2N_(d-1)

2N_(d-1) | CU_(d-1)
980

990

2N_(d-1) | 2N_(d-1) | N_(d-1) | N_(d-1)
2N_(d-1) | | N_(d-1) | 0 | 2N_(d-1) | 0 | 1 | N_(d-1) | 0 | 1
| | | 1 | | | | | 2 | 3
992 | 994 | 996 | 998

2N_d

2N_d | 
999

EP 2 830 312 A1

43

## FIG. 10

```
                    1014        1016
       1012
                           1020 1022
                    1018
                           1024 1026

                1030 1032
       1028     1040 1042
                1044 1046 1048

       1050     1052     1054
```

CODING UNIT (1010)

## FIG. 11

```
                    1014           1016

                                   1022

                1032
                       1048

       1050  1052           1054
```

PREDICTION UNIT (1060)

1050   1052

# FIG. 12

1014—

—1016

—1022

1032

—1048

—1054

1050

1052

TRANSFORMATION UNIT (1070)

FIG. 13

CU

1300

1302

| 1312 | 1314 |
| 1316 | **1318** |

1304 | 1306

PU

| 1322 2Nx2N | 1324 2NxN | 1326 Nx2N | 1328 NxN | 1332 2NxnU | 1334 2NxnD | 1336 nLx2N | 1338 nRx2N |

TU

TU size flag=0 — 1342

TU size flag=1 — 1344

TU

TU size flag=0 — 1352

TU size flag=1 — 1354

EP 2 830 312 A1

FIG. 14

1400

1420

HIGHER LAYER
ENCODER

1430

OUTPUT UNIT

1410

LOWER LAYER
ENCODER

FIG. 15

1500

1530

HIGHER LAYER
DECODER

1510

PARSING UNIT

1520

LOWER LAYER
DECODER

# FIG. 16

# FIG. 17

# FIG. 18

# FIG. 19

START

ENCODE LOWER LAYER IMAGE BASED ON CODING UNITS HAVING TREE STRUCTURE ──1910

DETERMINE SCALABLE CODING MODES OF HIGHER LAYER IMAGE BASED ON THE CODING UNITS HAVING THE TREE STRUCTURE ──1920

PREDICT AND ENCODE THE HIGHER LAYER IMAGE BY REFERRING TO THE LOWER LAYER IMAGE BASED ON THE SCALABLE CODING MODES ──1930

TRANSMIT ENCODING INFORMATION OF THE LOWER LAYER IMAGE AND SCALABLE CODING MODES OF THE HIGHER LAYER IMAGE BASED ON THE SCALABL CODING MODES ──1940

END

# FIG. 20

START

PARSE ENCODING INFORMATION OF LOWER LAYER IMAGE AND SCALABLE CODING MODES OF HIGHER LAYER IMAGE FROM BITSTREAM — 2010

DECODE THE LOWER LAYER IMAGE BASED ON CODING UNITS HAVING TREE STRUCTURE — 2020

PREDICT AND DECODE THE HIGHER LAYER IMAGE BASED ON THE CODING UNITS HAVING THE TREE STRUCTURE BY REFERRING TO THE LOWER LAYER IMAGE BASED ON THE SCALABLE CODING MODES — 2030

END

# FIG. 21

START

ENCODE LOWER LAYER IMAGE BASED ON CODING UNITS HAVING TREE STRUCTURE — 2110

DETERMINE SCALABLE CODING MODES OF HIGHER LAYER IMAGE BASED ON THE CODING UNITS HAVING THE TREE STRUCTURE — 2120

PREDICT AND ENCODE THE HIGHER LAYER IMAGE BY DETERMINING DATA UNITS OF THE LOWER LAYER IMAGE THAT ARE TO BE REFERRED TO BY DATA UNITS OF THE HIGHER LAYER IMAGE BASED ON THE SCALABLE CODING MODES — 2130

END

# FIG. 22

START

PARSE ENCODING INFORMATION OF LOWER LAYER IMAGE AND SCALABLE CODING MODES OF HIGHER LAYER IMAGE FROM BITSTREAM — 2210

DECODE THE LOWER LAYER IMAGE BASED ON CODING UNITS HAVING TREE STRUCTURE — 2220

PREDICT AND DECODE THE HIGHER LAYER IMAGE BASED ON THE CODING UNITS HAVING THE TREE STRUCTURE BY DETERMINING DATA UNITS OF THE LOWER LAYER IMAGE THAT ARE TO BE REFERRED TO BY DATA UNITS OF THE HIGHER LAYER IMAGE BASED ON THE SCALABLE CODING MODES — 2230

END

## INTERNATIONAL SEARCH REPORT

| International application No. |
|---|
| **PCT/KR2013/002285** |

| A. CLASSIFICATION OF SUBJECT MATTER |
|---|
| ***H04N 7/26(2006.01)i*** |
| According to International Patent Classification (IPC) or to both national classification and IPC |

| B. FIELDS SEARCHED |
|---|
| Minimum documentation searched (classification system followed by classification symbols) |
| H04N 7/26; H04N 7/32; H04N 21/63 |
| Documentation searched other than minimum documentation to the extent that such documents are included in the fields searched<br>Korean Utility models and applications for Utility models: IPC as above<br>Japanese Utility models and applications for Utility models: IPC as above |
| Electronic data base consulted during the international search (name of data base and, where practicable, search terms used)<br>eKOMPASS (KIPO internal) & Keywords: scalable video coding, scalable video encoding, lower layer, upper layer, interlayer prediction. |

| C. DOCUMENTS CONSIDERED TO BE RELEVANT | | |
|---|---|---|
| Category* | Citation of document, with indication, where appropriate, of the relevant passages | Relevant to claim No. |
| X | KR 10-1041823 B1 (LG ELECTRONICS INC.) 17 June 2011<br>See paragraphs [0019]-[0029] and [0040]-[0043] and figures 1-3b and 8-9. | 1,4-7,10-15 |
| Y | | 2-3,8-9 |
| Y | KR 10-2007-0096979 A (ELECTRONICS AND TELECOMMUNICATIONS RESEARCH INSTITUTE et al.) 02 October 2007<br>See paragraphs [0023], [0044], [0051]-[0052] and [0114]-[0120]; and figures 12-13. | 2-3,8-9 |
| A | KR 10-0904444 B1 (LG ELECTRONICS INC.) 26 June 2009<br>See paragraphs [0038]-[0046] and figure 1. | 1-15 |
| A | KR 10-0951465 B1 (LG ELECTRONICS INC.) 07 April 2010<br>See paragraphs [0055]-[0063] and [0077]-[0082]; and figures 10-11 and 15. | 1-15 |
| A | US 2010-0020886 A1 (RAVEENDRAN, Vijayalakshmi R. et al.) 28 January 2010<br>See paragraph [0233] and figure 13. | 1-15 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 JUNE 2013 (26.06.2013) | **26 JUNE 2013 (26.06.2013)** |
| Name and mailing address of the ISA/KR<br>Korean Intellectual Property Office<br>Government Complex-Daejeon, 189 Seonsa-ro, Daejeon 302-701, Republic of Korea<br>Facsimile No. 82-42-472-7140 | Authorized officer<br><br>Telephone No. |

Form PCT/ISA/210 (second sheet) (July 2009)

53

## EP 2 830 312 A1

INTERNATIONAL SEARCH REPORT
Information on patent family members

International application No.

**PCT/KR2013/002285**

| Patent document cited in search report | Publication date | Patent family member | Publication date |
|---|---|---|---|
| KR 10-1041823 B1 | 17.06.2011 | CN 101180885 A | 14.05.2008 |
| | | JP 2008-536438 A | 04.09.2008 |
| | | KR 10-2006-0109247 A | 19.10.2006 |
| | | KR 10-2006-0109248 A | 19.10.2006 |
| | | KR 10-2006-0109249 A | 19.10.2006 |
| | | KR 10-2006-0109251 A | 19.10.2006 |
| | | KR 10-2006-0109279 A | 19.10.2006 |
| | | KR 10-2009-0007461 A | 16.01.2009 |
| | | TW I324480 B | 01.05.2010 |
| | | TW I324481 B | 01.05.2010 |
| | | US 2006-0233249 A1 | 19.10.2006 |
| | | US 2006-0233263 A1 | 19.10.2006 |
| | | US 2009-0180550 A1 | 16.07.2009 |
| | | US 2009-0180551 A1 | 16.07.2009 |
| | | US 7586985 B2 | 08.09.2009 |
| | | US 7593467 B2 | 22.09.2009 |
| | | US 7688897 B2 | 30.03.2010 |
| | | US 7746933 B2 | 29.06.2010 |
| | | WO 2006-104363 A1 | 05.10.2006 |
| | | WO 2006-104364 A1 | 05.10.2006 |
| | | WO 2006-104365 A1 | 05.10.2006 |
| | | WO 2006-104366 A1 | 05.10.2006 |
| | | WO 2006-109986 A1 | 19.10.2006 |
| | | WO 2006-109988 A1 | 19.10.2006 |
| KR 10-2007-0096979 A | 02.10.2007 | CN 101455049 A | 10.06.2009 |
| | | CN 101455049 B | 14.11.2012 |
| | | EP 2005692 A1 | 24.12.2008 |
| | | JP 04815530 B2 | 16.11.2011 |
| | | JP 2009-531949 A | 03.09.2009 |
| | | KR 10-2007-0098447 A | 05.10.2007 |
| | | US 2010-0232432 A1 | 16.09.2010 |
| | | US 2011-0150084 A1 | 23.06.2011 |
| | | WO 2007-111473 A1 | 04.10.2007 |
| | | WO 2007-111488 A1 | 04.10.2007 |
| KR 10-0904444 B1 | 26.06.2009 | CN 102158697 A | 17.08.2011 |
| | | EP 2060122 A1 | 20.05.2009 |
| | | EP 2060123 A1 | 20.05.2009 |
| | | JP 2009-540733 A | 19.11.2009 |
| | | JP 2009-540734 A | 19.11.2009 |
| | | KR 10-0956163 B1 | 06.05.2010 |
| | | KR 10-2008-0039781 A | 07.05.2008 |
| | | KR 10-2008-0093427 A | 21.10.2008 |
| | | KR 10-2008-0099246 A | 12.11.2008 |
| | | KR 10-2009-0045323 A | 07.05.2009 |
| | | TW 200829030 A | 01.07.2008 |
| | | TW 200833117 A | 01.08.2008 |
| | | TW I364990 B | 21.05.2012 |

Form PCT/ISA/210 (patent family annex) (July 2009)

INTERNATIONAL SEARCH REPORT
Information on patent family members

International application No.

**PCT/KR2013/002285**

| Patent document cited in search report | Publication date | Patent family member | Publication date |
|---|---|---|---|
|  |  | US 2009-0034626 A1 | 05.02.2009 |
|  |  | US 2009-0220010 A1 | 03.09.2009 |
|  |  | WO 2008-030067 A1 | 13.03.2008 |
|  |  | WO 2008-030068 A1 | 13.03.2008 |
| KR 10-0951465 B1 | 07.04.2010 | KR 10-0988622 B1 | 20.10.2010 |
|  |  | KR 10-2009-0089960 A | 25.08.2009 |
|  |  | KR 10-2009-0103414 A | 01.10.2009 |
|  |  | WO 2009-104850 A1 | 27.08.2009 |
|  |  | WO 2009-136681 A1 | 12.11.2009 |
| US 2010-0020886 A1 | 28.01.2010 | AU 2006-294509 A1 | 05.04.2007 |
|  |  | AU 2006-294509 B2 | 02.12.2010 |
|  |  | CA 2623929 A1 | 05.04.2007 |
|  |  | CN 101313580 A | 26.11.2008 |
|  |  | CN 101313580 C | 26.11.2008 |
|  |  | CN 101313588 A | 26.11.2008 |
|  |  | CN 101313588 B | 22.08.2012 |
|  |  | CN 101313588 C | 26.11.2008 |
|  |  | CN 101313589 A | 26.11.2008 |
|  |  | CN 101313589 C | 26.11.2008 |
|  |  | CN 101313592 A | 26.11.2008 |
|  |  | CN 101313592 B | 02.03.2011 |
|  |  | CN 101313592 C | 26.11.2008 |
|  |  | CN 101322400 A | 10.12.2008 |
|  |  | CN 101322413 A | 10.12.2008 |
|  |  | CN 101326809 A | 17.12.2008 |
|  |  | CN 101331765 A | 24.12.2008 |
|  |  | CN 101331765 B | 08.02.2012 |
|  |  | CN 101411183 A | 15.04.2009 |
|  |  | CN 101982977 A | 02.03.2011 |
|  |  | CN 102572214 A | 11.07.2012 |
|  |  | EP 1929784 A1 | 11.06.2008 |
|  |  | EP 1929784 B1 | 14.09.2011 |
|  |  | EP 1932362 A1 | 18.06.2008 |
|  |  | EP 1938580 A1 | 02.07.2008 |
|  |  | EP 1938590 A2 | 02.07.2008 |
|  |  | EP 1938615 A1 | 02.07.2008 |
|  |  | EP 1938615 B1 | 06.07.2011 |
|  |  | EP 1938621 A2 | 02.07.2008 |
|  |  | EP 1941723 A1 | 09.07.2008 |
|  |  | EP 1941741 A1 | 09.07.2008 |
|  |  | EP 1941741 B1 | 25.07.2012 |
|  |  | EP 2002650 A1 | 17.12.2008 |
|  |  | EP 2227019 A1 | 08.09.2010 |
|  |  | EP 2293539 A2 | 09.03.2011 |
|  |  | EP 2293539 A3 | 20.03.2013 |
|  |  | EP 2293570 A1 | 09.03.2011 |
|  |  | EP 2302932 A1 | 30.03.2011 |
|  |  | JP 2009-510932 A | 12.03.2009 |

Form PCT/ISA/210 (patent family annex) (July 2009)

EP 2 830 312 A1

INTERNATIONAL SEARCH REPORT
Information on patent family members

International application No.

**PCT/KR2013/002285**

| Patent document cited in search report | Publication date | Patent family member | Publication date |
|---|---|---|---|
| | | JP 2009-510933 A | 12.03.2009 |
| | | JP 2009-510936 A | 12.03.2009 |
| | | JP 2009-510937 A | 12.03.2009 |
| | | JP 2009-512397 A | 19.03.2009 |
| | | JP 2009-512400 A | 19.03.2009 |
| | | JP 2009-513090 A | 26.03.2009 |
| | | JP 2009-515384 A | 09.04.2009 |
| | | JP 2009-532741 A | 10.09.2009 |
| | | JP 2012-110038 A | 07.06.2012 |
| | | JP 2012-110039 A | 07.06.2012 |
| | | JP 2012-199961 A | 18.10.2012 |
| | | JP 4976407 B2 | 18.07.2012 |
| | | JP 5139303 B2 | 06.02.2013 |
| | | JP 5149188 B2 | 20.02.2013 |
| | | KR 10-0955444 B1 | 04.05.2010 |
| | | KR 10-0957479 B1 | 14.05.2010 |
| | | KR 10-0968106 B1 | 06.07.2010 |
| | | KR 10-0971601 B1 | 20.07.2010 |
| | | KR 10-0988753 B1 | 20.10.2010 |
| | | KR 10-0989534 B1 | 25.10.2010 |
| | | KR 10-1019010 B1 | 04.03.2011 |
| | | KR 10-1127432 B1 | 04.07.2012 |
| | | KR 10-1197508 B1 | 12.11.2012 |
| | | KR 10-1242292 B1 | 12.03.2013 |
| | | KR 10-2008-0066717 A | 16.07.2008 |
| | | KR 10-2008-0068716 A | 23.07.2008 |
| | | KR 10-2011-0128366 A | 29.11.2011 |
| | | KR 10-2012-0091423 A | 17.08.2012 |
| | | KR 10-2012-0099806 A | 11.09.2012 |
| | | TW 200803517 A | 01.01.2008 |
| | | TW 200803518 A | 01.01.2008 |
| | | US 2007-0081586 A1 | 12.04.2007 |
| | | US 2007-0171280 A1 | 26.07.2007 |
| | | US 2007-0206117 A1 | 06.09.2007 |
| | | WO 2007-038701 A1 | 05.04.2007 |
| | | WO 2007-038702 A1 | 05.04.2007 |
| | | WO 2007-038724 A1 | 05.04.2007 |
| | | WO 2007-038725 A2 | 05.04.2007 |
| | | WO 2007-047693 A2 | 26.04.2007 |
| | | WO 2007-047755 A1 | 26.04.2007 |
| | | WO 2007-047758 A1 | 26.04.2007 |
| | | WO 2007-065041 A1 | 07.06.2007 |
| | | WO 2007-114995 A1 | 11.10.2007 |

Form PCT/ISA/210 (patent family annex) (July 2009)